(19) Europäisches Patentamt
European Patent Office
Office européen des brevets

(11) **EP 2 109 308 A2**

(12) **EUROPEAN PATENT APPLICATION**

(43) Date of publication:
**14.10.2009 Bulletin 2009/42**

(51) Int Cl.:
***H04N 5/232*** *(2006.01)*

(21) Application number: **09156875.8**

(22) Date of filing: **31.03.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **10.04.2008 JP 2008102942**

(71) Applicant: **Sony Corporation**
**Tokyo 108-0075 (JP)**

(72) Inventor: **Kobayashi, Daizen**
**TOKYO 108-0075 (JP)**

(74) Representative: **Körber, Martin Hans**
**Mitscherlich & Partner**
**Patent- und Rechtsanwälte**
**Sonnenstraße 33**
**80331 München (DE)**

(54) **Imaging device, captured image recording method, and program**

(57) Disclosed herein is an imaging device, including, an imager configured to image a subject to generate a captured image thereof, a subject distance calculator configured to calculate a subject distance up to the subject, a captured image recording commander configured to give a recording instruction to record the captured image based on a present position and the subject distance and a recording controller configured to record the captured image based on the recording instruction.

FIG.1

**EP 2 109 308 A2**

**Description**

BACKGROUND OF THE INVENTION

1. Field of the Invention

The present invention relates to an imaging device, and more particularly to an imaging device which is capable of performing a ranging process for measuring the distance up to a subject, a captured image recording method, and a program for enabling a computer to perform such a captured image recording method.

2. Description of the Related Art

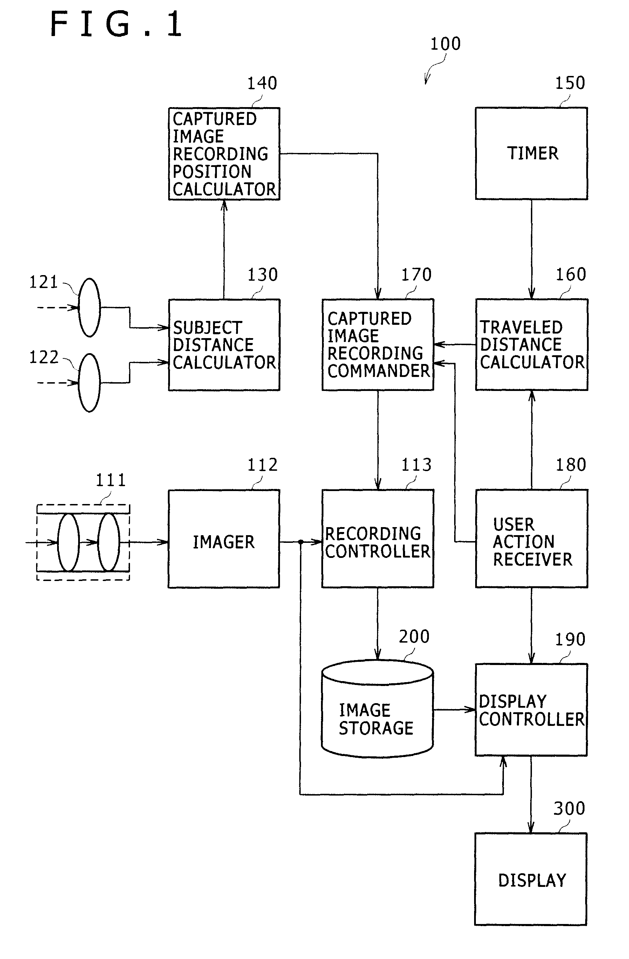

In recent years, there have widely been used imaging devices such as digital still cameras for imaging a subject such as an urban area or the like to generate a captured image, and recording the captured image. There has been proposed a panoramic image generating method for joining a plurality of captured images recorded by such an imaging device into a panoramic image of a subject that is present in a relatively wide range.
For generating a panoramic image according to the proposed panoramic image generating method, feature points need to be extracted from a plurality of captured images, and the extracted feature points are superimposed to joint the captured images into a panoramic image. As the feature points need to be extracted from the captured images, the proposed panoramic image generating method poses a relatively large image processing burden for extracting such feature points.
There has also been proposed another panoramic image generating method for sampling a plurality of slits, each having a constant vertical length and a variable small width, from image data captured by a video camera, the variable small width depending on the speed at which the imager moves, and joining the slits into a panoramic image (see, for example, Japanese Patent Laid-open No. 2000-156818, Fig. 1).

SUMMARY OF THE INVENTION

According to the proposed other panoramic image generating method, since it is not necessary to extract feature points from captured images for the purpose of joining the captured images, the image processing burden is reduced.
However, inasmuch as slits have to be sampled from captured image data, the amount of data that is discarded from the captured image data is large. Therefore, the captured image data cannot effectively be utilized, and the processing rate at the time the captured image data are recorded tends to be low.
It is an embodiment of the present invention to reduce an image processing burden in generating a panoramic image.
According to a first embodiment of the present invention, there is provided an imaging device, including an imager configured to image a subject to generate a captured image thereof, a subject distance calculator configured to calculate a subject distance up to the subject, a captured image recording commander configured to give a recording instruction to record the captured image based on a present position and the subject distance, and a recording controller configured to record the captured image based on the recording instruction. There are also provided a method of recording captured images and a program for enabling a computer to carry out such a method. The imaging device, the method, and the program make it possible to calculate the subject distance and give the recording instruction to record the captured image based on the present position and the subject distance.
In the first embodiment of the present invention, the imaging device may further include a captured image recording position calculator configured to calculate, based on the subject distance, a captured image recording position which is a position to record a second captured image generated by the imager after the captured image is recorded, wherein the captured image recording commander may give a recording instruction to record the second captured image when the imaging device reaches the captured image recording position. Therefore, the captured image recording position may be calculated based on the subject distance, and the recording instruction may be given to record the second captured image when the imaging device reaches the captured image recording position.
In the first embodiment of the present invention, the imaging device may further include a traveled distance acquirer configured to acquire a traveled distance in a particular direction of the imaging device, wherein the subject distance calculator may calculate, as the subject distance, a distance up to an end in the particular direction of the subject included in the captured image, the captured image recording position calculator may calculate the captured image recording position in the particular direction based on the subject distance, and the captured image recording commander may determine whether the imaging device reaches the captured image recording position or not based on the acquired traveled distance, and gives the recording instruction to record the second captured image if the imaging device reaches the captured image recording position. Therefore, the traveled distance in the particular direction of the imaging device may be acquired, it may be determined whether the imaging device reaches the captured image recording position or not based on the acquired traveled distance, and the recording instruction may be given to record the second captured image if the imaging device reaches the captured image recording position.

In the first embodiment of the present invention, the imaging device may further include a present position acquirer configured to acquire a present position in a particular direction of the imaging device, wherein the subject distance calculator may calculate, as the subject distance, a distance up to an end in the particular direction of the subject included in the captured image, the captured image recording position calculator may calculate the captured image recording position in the particular direction based on the subject distance, and the captured image recording commander may give the recording instruction to record the second captured image if the acquired present position reaches the captured image recording position. The present position in the particular direction of the imaging device may be acquired, and the recording instruction may be given to record the second captured image if the acquired present position reaches the captured image recording position.

In the first embodiment of the present invention, the imaging device may further include a present position acquirer configured to acquire the present position, and an angular displacement detector configured to detecte an angular displacement of the imaging device about a vertical axis thereof, wherein the subject distance calculator may calculate, as the subject distance, a distance up to an end in a particular direction of the subject included in the captured image, and the captured image recording commander may give a recording instruction to record a second captured image generated by the imager after the captured image is recorded, based on the acquired present position and the detected angular displacement. Therefore, the present position of the imaging device may be acquired, the angular displacement of the imaging device may be detected, and the recording instruction may be given to record the second captured image based on the acquired present position and the detected angular displacement.

In the first embodiment of the present invention, the captured image recording commander may make constant an imaging angle which is an angle to specify a recording range for the captured image, and give the recording instruction to record the second captured image if the acquired present position reaches a position to record the second captured image which is determined based on the subject distance and the detected angular displacement. Therefore, the imaging angle may be made constant, and the recording instruction may be given to record the second captured image if the present position reaches the captured image recording position which is determined based on the detected angular displacement and the subject distance.

In the first embodiment of the present invention, the captured image recording commander may make constant a captured image recording position which is a position to record the second captured image, determine an imaging angle which is an angle to specify a recording angle for the captured image based on the subject distance and the detected angular displacement if the acquired present position reaches the captured image recording position, and give the recording instruction to record the second captured image in the recording range specified by the determined imaging angle. Therefore, the captured image recording position may be made constant, the imaging angle may be determined based on the detected angular displacement and the subject distance, and the recording instruction may be given to record the second captured image in the recording range which is specified by the imaging angle.

In the first embodiment of the present invention, the imaging device may further include a vibration detector configured to detect vibration of the imaging device, and a corrector configured to correct a vertical recording range for the captured image based on the detected vibration. Therefore, vibration of the imaging device may be detected, and the vertical recording range for the captured image may be corrected based on the detected vibration.

In the first embodiment of the present invention, the imaging device may further include a display controller configured to display captured images in a recorded sequence as a panoramic image. Therefore, the recorded captured images may be displayed in the recorded sequence as the panoramic image.

According to the present invention, processing burdens imposed for generating a panoramic image are reduced.

BRIEF DESCRIPTION OF THE DRAWINGS

Fig. 1 is a block diagram of a functional configuration of an imaging device according to an embodiment of the present invention;
Figs. 2A and 2B are views showing displayed screens for setting a panoramic imaging mode on a liquid crystal panel of the imaging device according to the embodiment;
Figs. 3A and 3B are views showing displayed screens with the set panoramic imaging mode on the liquid crystal panel of the imaging device according to the embodiment;
Fig. 4 is a view showing the manner in which images are captured and recorded to generate a panoramic image with the imaging device according to the embodiment;

Figs. 5A and 5B are views showing a captured image recording method for recording images to generate a panoramic image with the imaging device according to the embodiment, and also showing captured images recorded by the captured image recording method;

Fig. 6 is a diagram showing contents stored in an image storage of the imaging device according to the embodiment;

Figs. 7A and 7B are views showing displayed screens on the liquid crystal panel of the imaging device according to the embodiment;

Fig. 8 is a flowchart of a processing sequence of a panoramic image recording process carried out by the imaging device according to the embodiment;

Fig. 9 is a block diagram of a functional configuration of an modified imaging device according to the embodiment;

Fig. 10 is a view of a vehicle moving along a tortuous road, the vehicle carrying thereon the imaging device according to the embodiment;

Fig. 11 is a block diagram of a functional configuration of an imaging device according to another embodiment of the present invention;

Figs. 12A and 12B are views showing displayed screens on a liquid crystal panel of the imaging device according to the other embodiment;

Fig. 13 is a view showing a captured image recording method for recording images to generate a panoramic image with the imaging device according to the other embodiment;

Fig. 14 is a view showing the captured image recording method for recording images to generate a panoramic image with the imaging device according to the other embodiment;

Fig. 15 is a flowchart of a processing sequence of a panoramic image recording process carried out by the imaging device according to the other embodiment;

Fig. 16 is a flowchart of a processing sequence of a modified panoramic image recording process carried out by the imaging device according to the other embodiment;

Fig. 17 is a block diagram of a functional configuration of an imaging device according to still another embodiment of the present invention;

Fig. 18 is a view showing a captured image correcting process to be performed at the time the imaging device according to the still other embodiment oscillates about a horizontal axis across the optical axis thereof;

Fig. 19 is a view showing a captured image correcting process to be performed at the time the imaging device according to the still other embodiment oscillates vertically;

Fig. 20 is a view showing a captured image correcting process to be performed at the time the imaging device according to the still other embodiment oscillates along the optical axis thereof;

Fig. 21 is a view showing captured images to be corrected by a recording controller of the imaging device according to the still other embodiment; and

Fig. 22 is a flowchart of a processing sequence of a modified panoramic image recording process carried out by the imaging device according to the still other embodiment.

## DETAILED DESCRIPTION OF THE PREFERRED EMBODIMENTS

Fig. 1 shows in block form a functional configuration of an imaging device 100 according to an embodiment of the present invention.

As shown in Fig. 1, the imaging device 100 includes an optical system 111, an imager 112, a recording controller 113, lenses 121, 122, a subject distance calculator 130, a captured image recording position calculator 140, a timer 150, a traveled distance calculator 160, a captured image recording commander 170, a user action receiver 180, a display controller 190, an image storage 200, and a display 300. The imaging device 100 may be in the form of a digital still camera capable of performing a ranging process for measuring the distance up to a given area in an image to be captured, for example.

The optical system 111 includes a plurality of lenses, including a zoom lens, a focusing lens, etc., for converging light from a subject. The light from the subject is applied through the lenses and an iris, not shown, to the imager 112.

The imager 112 serves to convert the applied light from the subject to generate a captured image according to given imaging parameters, and output the captured image to the recording controller 113 and the display controller 190. Specifically, the imager 112 includes a photoelectric transducer and a signal processor, not shown. The photoelectric transducer converts a light signal applied from the subject through the optical system 111 into an analog image signal. The analog image signal is then processed by the signal processor for noise removal, A/D (Analog-to-Digital) conversion, etc. The processed digital image signal is then supplied to the recording controller 113 and the display controller 190. The imager 112 also performs a ranging process to focus on a given position in an image to be captured.

When the recording controller 113 is instructed to record a captured image by the captured image recording commander 170, the recording controller 113 records the captured image, which is output from the imager 112 at the time the recording controller 113 is instructed to record same, in the image storage 200.

The lenses 121, 122 are used when the subject distance calculator 130 calculates the distance up to the subject. The lenses 121, 122 converge light from the subject and supplies the converged light to the subject distance calculator 130.

Based on the converged light from the subject, the subject distance calculator 130 calculates the distance up to the subject. The subject distance calculator 130 supplies the calculated the distance up to the subject (subject distance) to the captured image recording position calculator 140. Specifically, the subject distance calculator 130 includes a first sensor array and a second sensor array, not shown, which are associated with the lenses 121, 122, respectively. The first sensor array converts a light signal applied from the subject through the lens 121 into an analog image signal, and the second sensor array converts a light signal applied from the subject through the lens 122 into an analog image signal. Based on the analog image signals generated by the first and second sensor arrays, the subject distance calculator 130 calculates the distance up to the subject and the angle of the imaging device 100 with respect to the subject according to the principles of a triangulation ranging process. In the present embodiment, it is assumed that the subject distance calculator 130 calculates the distance up to the subject which corresponds to a central area at the right end of the captured image, as the subject distance.

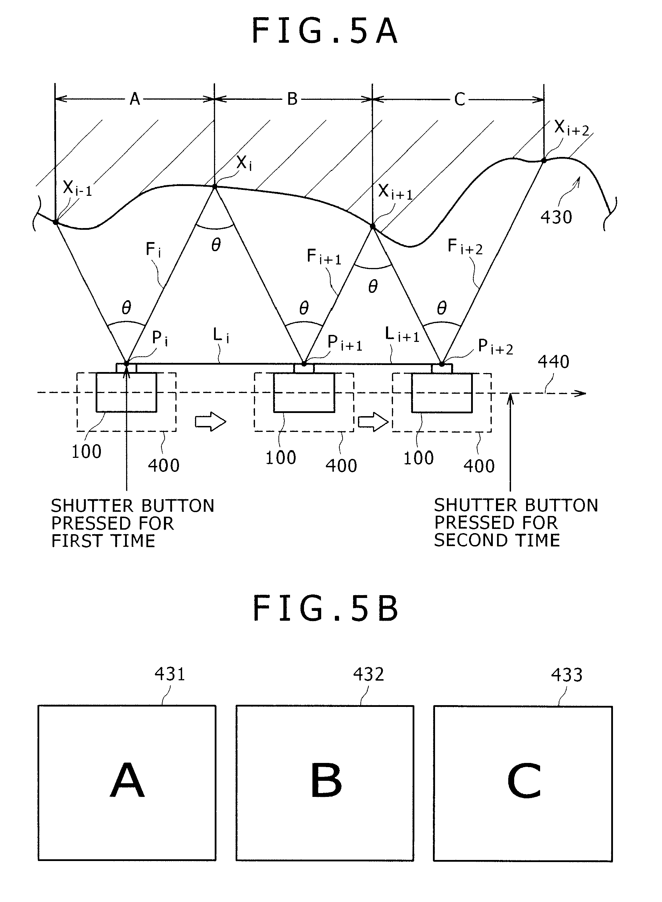

Based on the subject distance output from the subject distance calculator 130, the captured image recording position calculator 140 calculates a captured image recording position, which is a position where a next captured image is to be recorded after the preceding captured image has been recorded. The captured image recording position calculator 140 then outputs the calculated captured image recording position to the captured image recording commander 170. A process of calculating a captured image recording position will be described in detail later with referent to Fig. 5.

The timer 150 supplies the traveled distance calculator 160 with successive timer values to be used by the traveled distance calculator 160 to calculate a distance. The timer 150 counts up its timer value by 1 per 0.1 second, for example.

The traveled distance calculator 160 calculates the distance that the imaging device 100 has traveled, and outputs the calculated distance to the captured image recording commander 170. Specifically, the traveled distance calculator 160 holds the value of the speed received by the user action receiver 180, and multiplies the held value of the speed by the timer value supplied from the timer 150, thereby calculating the distance that the imaging device 100 has traveled. The traveled distance calculator 160 serves as an example of a traveled distance acquirer as claimed.

The captured image recording commander 170 determines a timing to record a captured image based on the captured image recording position output from the captured image recording position calculator 140 and the traveled distance output from the traveled distance calculator 160. Then, the captured image recording commander 170 outputs an instruction to record a captured image to the recording controller 113 according to the determined timing. A process of determining a timing to record a captured image will be described in detail later with reference to Fig. 5.

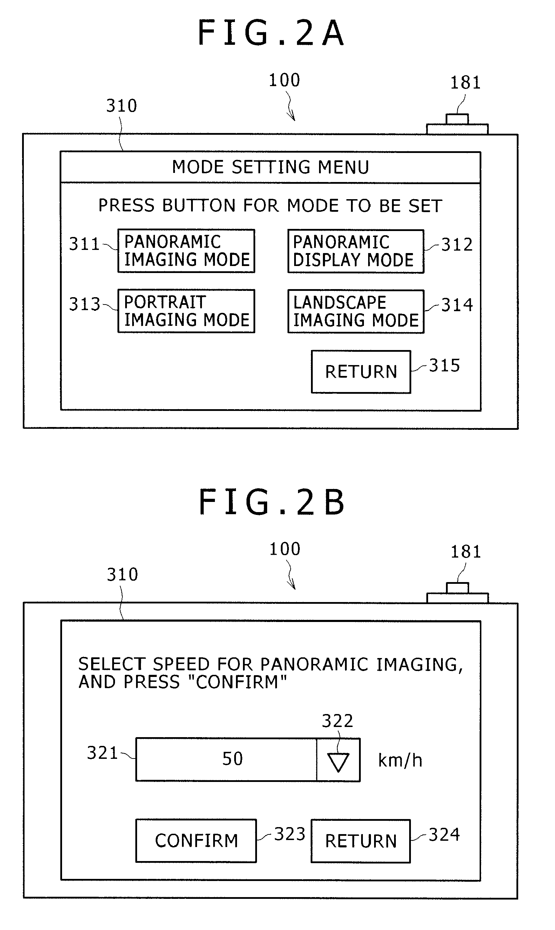

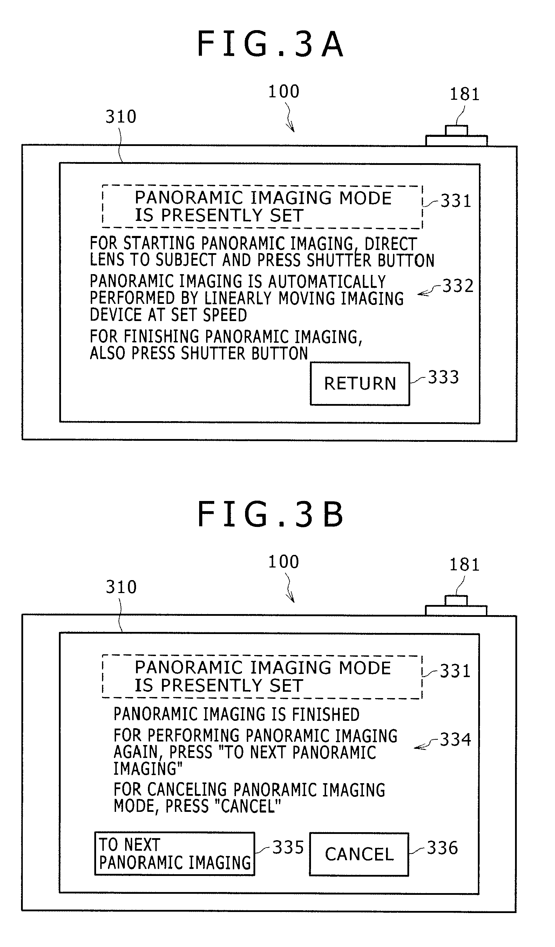

The user action receiver 180 receives a user action made by the user of the imaging device 100, and outputs a signal depending on the received user action to the traveled distance calculator 160, the captured image recording commander 170, or the display controller 190. For example, the user action receiver 180 includes a manually operable member such as a shutter button 181 on the imaging device 100, as shown in Figs. 2A, 2B and 3A, 3B, for starting to record captured images in a panoramic imaging mode for recording captured images used to generate a panoramic image, for example. In the present embodiment, a portion of the user action receiver 180 and the display 100 are integrally combined as a liquid crystal panel 310 (see Figs. 2A, 2B and 3A, 3B). The liquid crystal panel 310 includes a liquid crystal touch panel for displaying selector buttons for selecting areas touched by a finger or the like.

The display controller 190 displays captured images stored in the image storage 200 and captured images generated by the imager 112 on the display 300 based on a user action for a display instruction which is received by the user action receiver 180. The display controller 190 also displays various screens shown in Figs. 2A, 2B and 3A, 3B on the display 300.

The image storage 200 stores captured images supplied from the recording controller 113. The image storage 200 also supplies stored captured images to the display controller 190. The captured images that are stored in the image storage 200 are in the form of image data according to the JPEG (Joint Photographic Experts Group) format. The image storage 200 may include a recording medium such as a memory card, an optical disk, a magnetic disk, a magnetic tape, or the like, which may be fixedly or removably mounted in the imaging device 100.

The display 300 displays various captured im-ages supplied from the display controller 190.

Figs. 2A, 2B and 3A, 3B show examples of displayed screens on the display 300, i.e., the liquid crystal panel 310. Fig. 2A shows a displayed mode setting screen for setting imaging modes and display modes on the liquid crystal panel 310. The mode setting screen includes a "panoramic imaging mode" setting button 311, a "panoramic display mode" setting button 312, a "portrait imaging mode" setting mode 313, a "landscape imaging mode" setting button 314, and a return button 315.

The "panoramic imaging mode" setting button 311 is a button which the user touches for setting a panoramic imaging mode. Fig. 2B shows an example of a displayed screen which appears on the liquid crystal panel 310 when the user touches the "panoramic imaging mode" setting button 311.

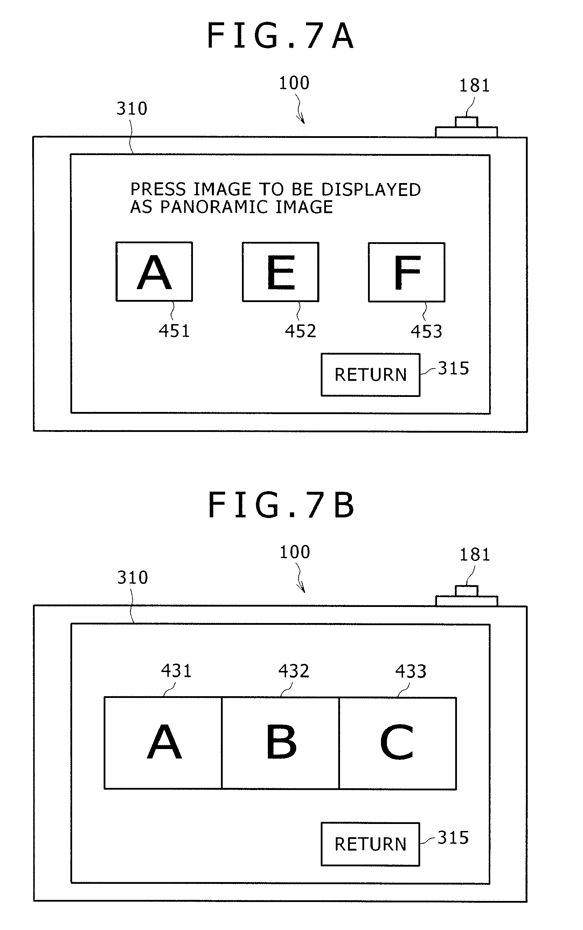

The "panoramic display mode" setting button 312 is a button which the user touches for setting a panoramic display mode for displaying captured images recorded in the panoramic imaging mode as a panoramic image. Figs. 7A and 7B show examples of displayed screens which appear on the liquid crystal panel 310 when the user touches the "panoramic display mode" setting button 312.

The "portrait imaging mode" setting mode 313 is a button which the user touches for setting a portrait imaging mode that is an imaging mode for imaging portraits. The "landscape imaging mode" setting button 314 is a button which the user touches for setting a landscape imaging mode that is an imaging mode for imaging landscapes. The displayed mode setting screen may include setting buttons for setting other imaging modes and display modes. These setting buttons will not be de-scribed in detail below.

Fig. 2B shows a speed setting screen which is displayed on the liquid crystal panel 310 when the user touches the "panoramic imaging mode" setting button 311 in the mode setting menu screen shown in Fig. 2A. The speed setting screen shown in Fig. 2B, which is used by the user to set a speed in the panoramic imaging mode, includes a "speed" selecting area 321, a pull-down button 322, a "confirm" button 323, and a return button 324.

The "speed" selecting area 321 is an area for selecting a speed in the panoramic imaging mode. When the user wants to select a speed in the "speed" selecting area 321, the user touches the pull-down button 322 to display a pull-down menu including a list of speeds, and then selects a desired speed from the displayed list of speeds. In Fig. 2B, the user has selected "50 (km/h)." The pull-down menu may include speeds at intervals of 5 km/h, such as "25," "30," "35," "40," "45," "50," etc., for example. Instead of selecting a desired speed from the pull-down menu, the user may directly enter a desired speed into the "speed" selecting area 321.

The "confirm" button 323 is a button which the user touches to go to a panoramic imaging mode starting screen shown in Fig. 3A after the user has selected a speed in the "speed" selecting area 321. The "return" button 324 is a button which the user touches to change from the speed setting screen shown in Fig. 2B to the mode setting screen shown in Fig. 2A.

Fig. 3A shows the panoramic imaging mode starting screen which is displayed when the user touches the "confirm" button 323 in the speed setting screen shown in Fig. 2B. The panoramic imaging mode starting screen, which is a screen displayed before the panoramic imaging mode is started, includes a presently set mode display area 331, a panoramic imaging mode description display area 332, and a "return" button 333. These display areas and button are displayed over captured images generated by the imager 112.

The presently set mode display area 331 is an area wherein the letters "PANORAMIC IMAGING MODE IS PRESENTLY SET" are displayed, indicating to the user that the panoramic imaging mode is presently set.

The panoramic imaging mode description display area 332 is an area wherein a description of the panoramic imaging mode is displayed. The description of the panoramic imaging mode will be described in detail later with reference to Fig. 5.

The "return" button 333 is a button which the user touches to change from the panoramic imaging mode starting screen shown in Fig. 3A to the speed setting screen shown in Fig. 2B.

Fig. 3B shows a panoramic imaging mode finishing screen displayed after captured images are recorded according to the description displayed in the panoramic imaging mode description display area 332 of the panoramic imaging mode starting screen shown in Fig. 3A.

The panoramic imaging mode finishing screen shown in Fig. 3B, which is a screen when the panoramic imaging mode is finished, includes a presently set mode display area 331, a next panoramic imaging mode guidance display area 334, a "next panoramic imaging mode" button 335, and a "cancel" button 336. The presently set mode display area 331 is the same as the presently set mode display area 331 shown in Fig. 3A, and will not be described below.

The next panoramic imaging mode guidance display area 334 is an area wherein a description about how to perform a next panoramic imaging mode and how to cancel a panoramic imaging mode is displayed when the present panoramic imaging mode is finished.

The "next panoramic imaging mode" button 335 is a button which the user touches to perform a next panoramic imaging mode. When the user touches the "next panoramic imaging mode" button 335, the panoramic imaging mode starting screen shown in Fig. 3A is displayed.

The "cancel" button 336 is a button which the user touches to cancel the panoramic imaging mode and return to the mode setting screen shown in Fig. 2A.

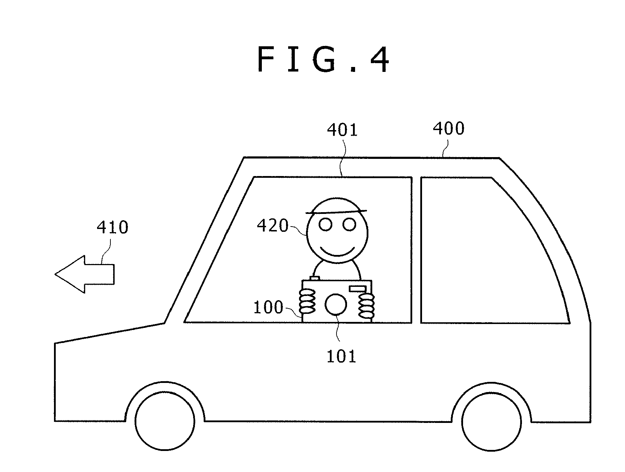

Fig. 4 is a view showing the manner in which images are captured and recorded to generate a panoramic image with the imaging device 100 according to the embodiment. In Fig. 4, a person 420 on a front passenger's seat in a vehicle 400 holds the imaging device 100 to capture images through a window 401 and record the captured images. The vehicle 400 is capable of moving at a constant speed, and the person 420 directs a lens 101, which represents the optical system 111 and the lenses 121, 122, of the imaging device 100 in a direction perpendicular to the direction 410 along which the vehicle 400.

Figs. 5A and 5B are views showing a captured image recording method for recording captured images to generate a panoramic image with the imaging device 100 according to the embodiment, and also showing captured images recorded by the captured image recording method. Fig. 5A shows in schematic plan the manner in which the person 420 on the vehicle 400 uses the imaging device 100 to capture images of a subject surface 430 and record the captured images as a panoramic image. The subject surface 430 which faces the imaging device 100 contains surface irregularities.

It is assumed in Fig. 5A that an angle for specifying a recording range for recording each of captured images used to generate a panoramic image is referred to as an imaging angle which is of a constant value θ, and that the vehicle 400 carrying the person 420 which is holding the imaging device 100 is moving at a constant speed, i.e., a speed set in the speed setting screen shown in Fig. 2B. When the shutter button 181 is pressed while the panoramic imaging mode starting screen shown in Fig. 3A is being displayed on the liquid crystal panel 310, the imaging device 100 records an image captured by pressing the shutter button 181. In Fig. 5A, it is assumed that the shutter button 181 is pressed in captured image recording position $P_i$. An imaging range in which to capture an image when the shutter 181 is pressed has a left end or boundary whose center intersects with the subject surface 430 at point $X_{i-1}$, and a right end or boundary whose center intersects with the subject surface 430 at point $X_i$, and the imaging range whose horizontal extent is defined between points $X_{i-1}$, $X_i$ is represented by A.

When the shutter button 181 is pressed in captured image recording position $P_i$, the subject distance calculator 130 calculates distance $F_i$ from captured image recording position $P_i$ to point $X_i$. Based on calculated distance $F_i$ and imaging angle θ, the captured image recording position calculator 140 calculates distance $L_i$ up to a next captured image recording position according to the following equation (1):

$$L_i = 2 \times F_i \times \sin(\theta \div 2) \qquad \ldots(1)$$

The captured image recording commander 170 monitors whether the distance calculated successively by the traveled distance calculator 160 has reached the distance $L_i$ calculated by the captured image recording position calculator 140 or not. If the distance calculated successively by the traveled distance calculator 160 has reached the distance $L_i$ calculated by the captured image recording position calculator 140, i.e., if the imaging device 100 has reached captured image recording position $P_{i+1}$, then the captured image recording commander 170 outputs an instruction to record a captured image to the recording controller 113. The recording controller 113 now records a captured image in captured image recording position $P_{i+1}$. An imaging range at captured image recording position $P_{i+1}$ has a left end or boundary whose center intersects with the subject surface 430 at point $X_i$, and a right end or boundary whose center intersects with the subject surface 430 at point $X_{i+1}$, and the imaging range whose horizontal extent is defined between points $X_i$, $X_{i+1}$ is represented by B. When the imaging device 100 has reached captured image recording position $P_{i+1}$, the subject distance calculator 130 calculates distance $F_{i+1}$ from captured image recording position $P_{i+1}$ to point $X_{i+1}$. Based on calculated distance $F_{i+1}$ and imaging angle θ, the captured image recording position calculator 140 calculates distance $L_{i+1}$ up to a next captured image recording position according to the above equation (1). Subsequently, the above process of recording a captured image is repeated until the user presses the shutter button 181. For example, as shown in Fig. 5A, if the user presses the shutter button 181 after a captured image is recorded in captured image recording position $P_{i+2}$, then the panoramic imaging mode is finished, and the panoramic imaging mode finishing screen shown in Fig. 3B is displayed on the liquid crystal panel 310.

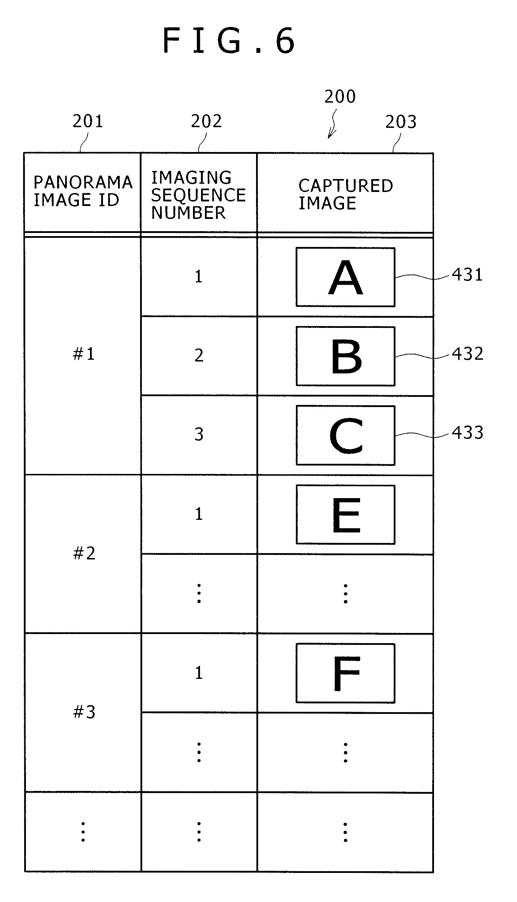

Fig. 5B shows captured imaged that have been recorded successively in captured image recording positions Pi, $P_{i+1}$, $P_{i+2}$ shown in Fig. 5A. A captured image 431 is recorded in captured image recording position $P_i$, with the imaging range "A" shown therein. A captured image 432 in captured image recording position $P_{i+1}$, with the imaging range "A" shown therein. A captured image 433 in captured image recording position $P_{i+2}$, with the imaging range "C" shown therein. A process of recording the captured images 431, 432, 433 will be described in detail later with reference to Fig. 6.

Fig. 6 is a diagram showing contents stored in image storage 200 of the imaging device 100 according to the embodiment. As shown in Fig. 6, the image storage 200 stores panoramic image IDS 201, imaging sequence numbers 202, and captured images 203.

Each of the panoramic image IDs 201 represents identification information for identifying a series of captured images recorded in the panoramic imaging mode. For example, "#1," "#2," or "#3" representing a group of captured images is stored as each of the panoramic image IDs 201. Specifically, one ID is assigned to a group of captured images recorded after the shutter button 181 is pressed while the panoramic imaging mode starting screen shown in Fig. 3A is being displayed until the shutter button 181 is pressed again. In Fig. 6, ID "#1" is assigned to the group of the captured images 431, 432, 433 which have been recorded according to the sequence shown in Fig. 5A.

The imaging sequence numbers 202 represent a sequence of captured images belonging to one group which are recorded in the panoramic imaging mode. For example, "1" through "3" are assigned as imaging sequence numbers 202 to the respective captured images 431, 432, 433 which have been recorded according to the sequence shown in Fig. 5A.

The captured images 203 represent a succession of captured images recorded in the panoramic imaging mode. In Fig. 6, the captured images 431, 432, 433 which have been recorded according to the sequence shown in Fig. 5A are indicated respectively by "A," "B," and "C."

Figs. 7A and 7B are views showing displayed screens on the liquid crystal panel 310 of the imaging device 100 according to the embodiment. Fig. 7A shows a panoramic image display selection screen, displayed on the liquid crystal panel 310, for displaying captured images stored in the image storage 200 as a panoramic image. The panoramic image display selection screen is displayed after the "panoramic display mode" setting button 312 is touched in the mode setting screen shown in Fig. 2A. The panoramic image display selection screen includes panoramic image selection buttons 451, 452, 453 and a "return" button 454.

The panoramic image selection buttons 451, 452, 453 are buttons which the user touches to display captured images stored in the image storage 200 as a panoramic image. In Fig. 7A, of the captured images stored in the image storage 200, captured images corresponding to "1" of the imaging sequence numbers 202 are displayed. Buttons representing imaged locations, imaged times, etc. may be displayed as the panoramic image selection buttons.

The "return" button 454 is a button which the user touches to change from the panoramic image display selection screen shown in Fig. 7A to the mode setting screen shown in Fig. 2A.

Fig. 7B shows a panoramic image display screen which is displayed after the panoramic image selection button 451 is touched in the panoramic image display selection screen shown in Fig. 7A. As shown in Fig. 7B, the panoramic image display screen includes the captured images 431, 432, 433 stored in the image storage 200 and corresponding to the panoramic image selection button 451, the captured images 431, 432, 433 being arranged according to the imaging sequence number 202. If the number of captured images to be included in the panoramic image display screen is too large to be displayed on the liquid crystal panel 310, then, the captured images may be displayed at a reduced scale on the liquid crystal panel 310. Alternatively, left and right scroll buttons may be displayed on the liquid crystal panel 310, and the displayed captured images may be scrolled to the left or right using the left or right scroll button.

The panoramic image display screen also includes a "return" button 455. The "return" button 455 is a button which the user touches to change from the panoramic image display screen shown in Fig. 7B to the panoramic image display selection screen shown in Fig. 7A.

As described above, for displaying captured images recorded in the panoramic imaging mode as a panoramic image, the captured images stored in the image storage 200 do not need to be specially processed, but can simply be displayed as the panoramic image on the liquid crystal panel 310. Specifically, when the captured images stored in the image storage 200 are displayed in an array according to the sequence in which they have been recorded, they are displayed as a panoramic image.

Operation of the imaging device 100 according to the present embodiment will be described below.

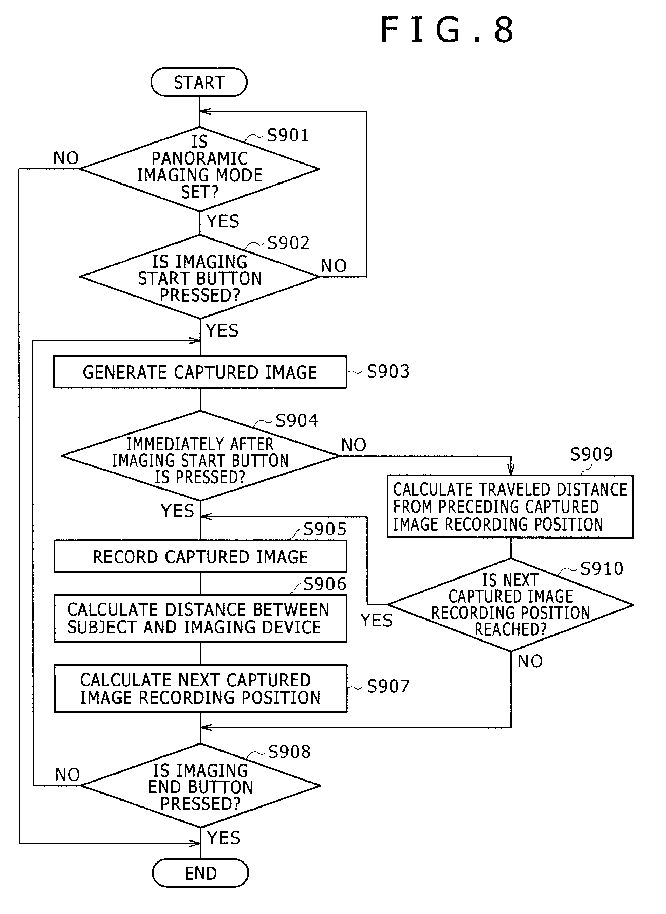

Fig. 8 is a flowchart of a processing sequence of a panoramic image recording process carried out by the imaging device 100 according to the embodiment.

First, it is determined whether the panoramic imaging mode has been set or not (step S901). If the panoramic imaging mode has been set, then the panoramic imaging mode starting screen shown in Fig. 3A is displayed on the liquid crystal panel 310. If the panoramic imaging mode has not been set (No in step S901), then the panoramic image recording process is put to an end.

If the panoramic imaging mode has been set (Yes in step S901), then the captured image recording commander 170 determines whether an imaging start button is pressed or not (step S902). In the present embodiment, it is judged that the imaging start button is pressed if the shutter button 181 is pressed while the panoramic imaging mode starting screen shown in Fig. 3A is being displayed on the liquid crystal panel 310.

Then, the imager 112 generates a captured image (step S903). Then, the captured image recording commander 170 determines whether the present time is immediately after the imaging start button is pressed or not (step S904). If the present time is immediately after the imaging start button is pressed (Yes in step S904), then the captured image recording commander 170 outputs an instruction to record a captured image to the recording controller 113, which records the captured image generated by the imager 112 in the image storage 200 (step S905). Then, the subject distance calculator 130 calculates the distance up to the subject (subject distance) included in an area corresponding to the center of the right end of the imaging range (step S906).

Then, the captured image recording position calculator 140 calculates a next captured image recording position based on the subject distance calculated by the subject distance calculator 130 (step S907). Then, the captured image recording commander 170 determines whether an imaging end button is pressed or not (step S908). In the present embodiment, it is judged that the imaging end button is pressed if the shutter button 181 is pressed while a panoramic image is being recorded. If the imaging end button is pressed (Yes in step S908) is pressed, then the panoramic image recording process is put to an end.

If the imaging end button is not pressed (No in step S908), the control returns to step S903, repeats the panoramic image recording process (steps S903 to S910)

If the present time is not immediately after the imaging start button is pressed (No in step S904), then the traveled distance calculator 160 calculates the distance from the preceding captured image recording position up to the present position (step S909). Then, the captured image recording commander 170 determines whether the present traveled distance calculated by the traveled distance calculator 160 has reached the next captured image recording position calculated by the captured image recording position calculator 140 or not (step S910). If the present traveled distance has reached the next captured image recording position (Yes in step S910), then the captured image recording commander 170 outputs an instruction to record a captured image to the recording controller 113, which records the captured image generated by the imager 112 in the image storage 200 (step S905). If the present traveled distance has not reached the next captured image recording position (No in step S910), then control goes to step S908.

According to the above processing sequence, the user manually enters a speed value, and the traveled distance calculator 160 calculates a present traveled distance based on the entered speed value. However, the traveled distance calculator 160 may calculate a present traveled distance based on an acceleration value from an acceleration sensor. If a speed value can be acquired from a moving apparatus, such as a vehicle or the like, which moves the imaging device 100, then the traveled distance calculator 160 may calculate a present traveled distance using the speed value acquired from the moving apparatus. Furthermore, if a traveled distance can be acquired from a moving apparatus, such as a vehicle or the like, which moves the imaging device 100, then the acquired traveled distance from the moving apparatus may directly be used. For example, the vehicle for moving the imaging device 100 may have an output terminal for outputting a speed or a traveled distance, and the imaging device 100 may acquire a speed or a traveled distance from the output terminal.

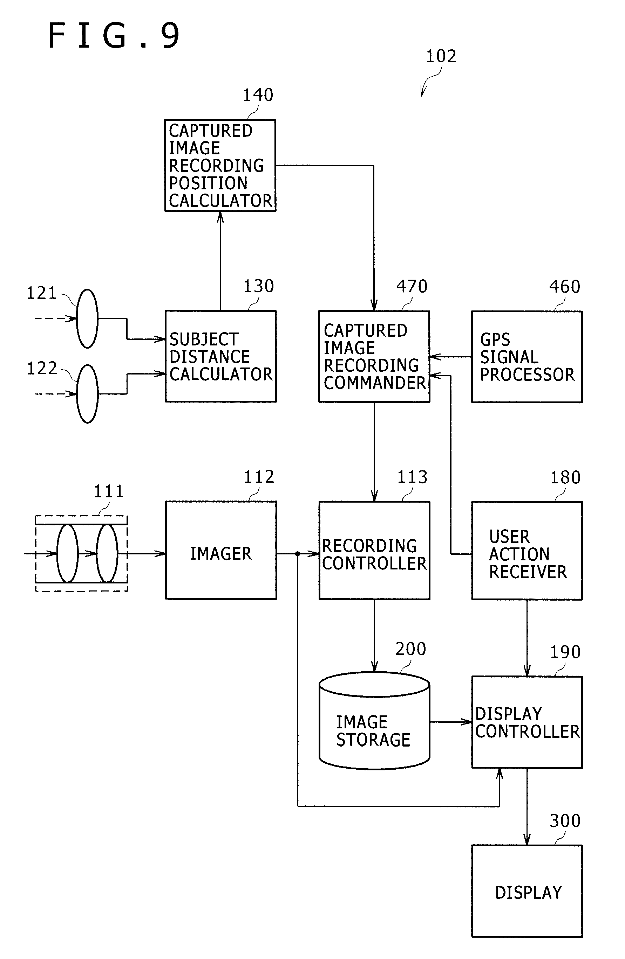

According to the above processing sequence, a timing to record a captured image is determined base on a present traveled distance. However, a timing to record a captured image may be determined based on the present position of imaging device 100. For example, as shown in Fig. 9, the present position of the imaging device 100 may be acquired from a GPS (Global Positioning System).

Fig. 9 is a block diagram of a functional configuration of a modified imaging device 102 according to the embodiment. The imaging device 102 is a modification of the imaging device 100 shown in Fig 1. The imaging device 102 includes a GPS signal processor 460 and a captured image recording commander 470 in place of the timer 150, the traveled distance calculator 160, and the captured image recording commander 170 shown in Fig. 1. Those parts of the imaging device 102 which are identical to those of the imaging device 100 shown in Fig. 1 will not be described in detail below. Those details of the imaging device 102 which are different from the imaging device 100 will mainly be described below.

As shown in Fig. 9, the GPS signal processor 460 calculates positional information based on a GPS signal received from a GPS reception antenna, not shown, and outputs the calculated positional information to the captured image recording commander 470. The calculated positional information includes data about the present position of the imaging device 102, such as the latitude, longitude, altitude, etc. The GPS signal processor 460 serves as an example of a present position acquirer as claimed.

The captured image recording commander 470 determines a timing to record a captured image based on the captured image recording position output from the captured image recording position calculator 140 and the present positional information output from the GPS signal processor 460. Specifically, the captured image recording commander 470 determines a timing to record a captured image when the present position of the imaging device 102 which is represented by the positional information output from the GPS signal processor 460 has reached the captured image recording position output from the captured image recording position calculator 140.

In Fig. 9, the GPS signal processor 460 serves as the present position acquirer. However, a position acquirer for acquiring positional information from a wireless LAN (Local Area Network) may be used as the present position acquirer. If the user does not manually enter a speed value, then the speed setting screen shown in Fig. 2B may be dispensed with.

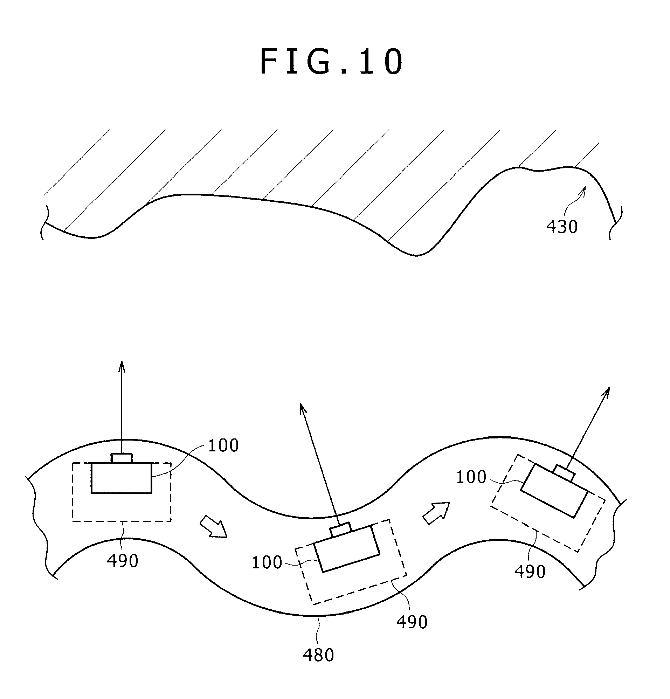

Fig. 10 shows a vehicle 490 moving along a tortuous road 480, the vehicle 490 carrying thereon the imaging device 100 according to the embodiment. The imaging device 100 captures images of a subject surface 430 which is identical to the subject surface 430 shown in Fig. 5A.

In Figs. 1 through 9, while the imaging device 100 is moving straight, the imaging device 100 records successively captured images including the subject which faces in the direction perpendicular to the straight direction along which the imaging device 100 moves. In Fig. 10, since the imaging device 100 is placed on the vehicle 490 moving along the tortuous road 480, the imaging device 100 has its optical axis variable depending on the curvature of the tortuous road 480. Consequently, successively captured images produced by the imaging device 100 may have left and right ends tending to overlap each other, and/or the subject surface 430 may have portions left out of successively captured images, so that generated panoramic images may be distorted. A process of successively recording captured images covering a subject with an imaging device 500 while the imaging device is moving along a tortuous road will be described below.

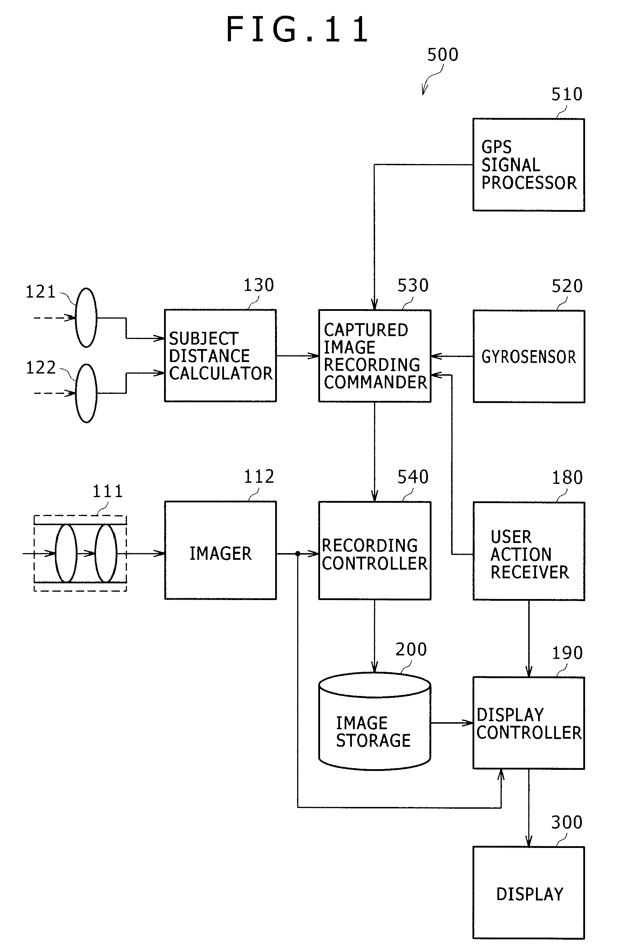

Fig. 11 is a block diagram of a functional configuration of an imaging device 500 according to another embodiment of the present invention. The imaging device 500 is different from the imaging device 100 shown in Fig. 1 in that it includes a recording controller 540, a GPS signal processor 510, a gyrosensor 520, and a captured image recording commander 530, instead of the recording controller 113, the timer 150, the traveled distance calculator 160, and the captured image recording commander 170. The imaging device 500 is free of the captured image recording position calculator 140 shown in Fig. 1. Those parts of the imaging device 500 which are identical to those of the imaging device 100 shown in Fig. 1 will not be described in detail below. Those details of the imaging device 500 which are different from the imaging device 100 will mainly be described below.

The subject distance calculator 130 supplies the calculated subject distance to the captured image recording commander 530.

The GPS signal processor 510 calculates positional information based on a GPS signal received from a GPS reception antenna, not shown, and outputs the calculated positional information to the captured image recording commander 530. The calculated positional information includes data about the present position of the imaging device 500, such as the latitude, longitude, altitude, etc. The GPS signal processor 510 serves as an example of a present position acquirer as claimed.

The gyrosensor 520 comprises an angular velocity sensor for detecting angular velocities about three axes which extend perpendicularly to each other. The gyrosensor 520 outputs detected angular velocities to the captured image recording commander 530.

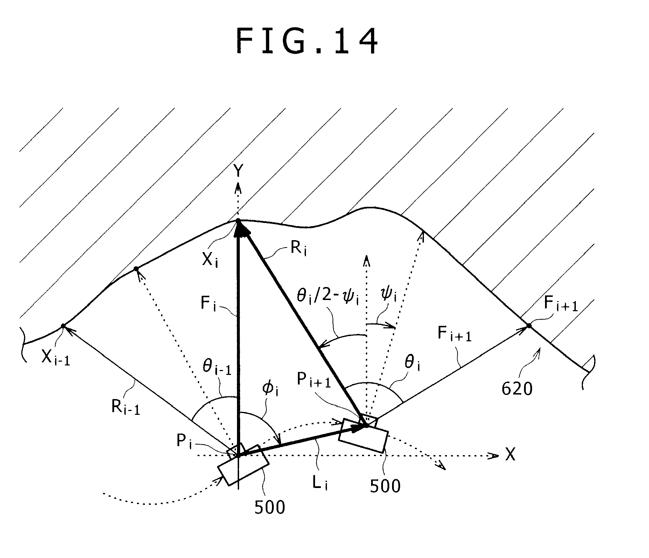

The captured image recording commander 530 determines a timing to record a captured image based on the subject distance output from the subject distance calculator 130, the positional information output from the GPS signal processor 510, and the angular velocities output from the gyrosensor 520. The captured image recording commander 530 outputs an instruction to record a captured image to the recording controller 540 according to the determined timing. A process of determining a timing to record a captured image will be described in detail later with reference to Fig. 14.

When the recording controller 540 is instructed to record a captured image by the captured image recording commander 530, the recording controller 540 records the captured image, which is output from the imager 112 at the time the recording controller 540 is instructed to record same, in the image storage 200. A process of recording captured images will be described in detail later with reference to Fig. 14.

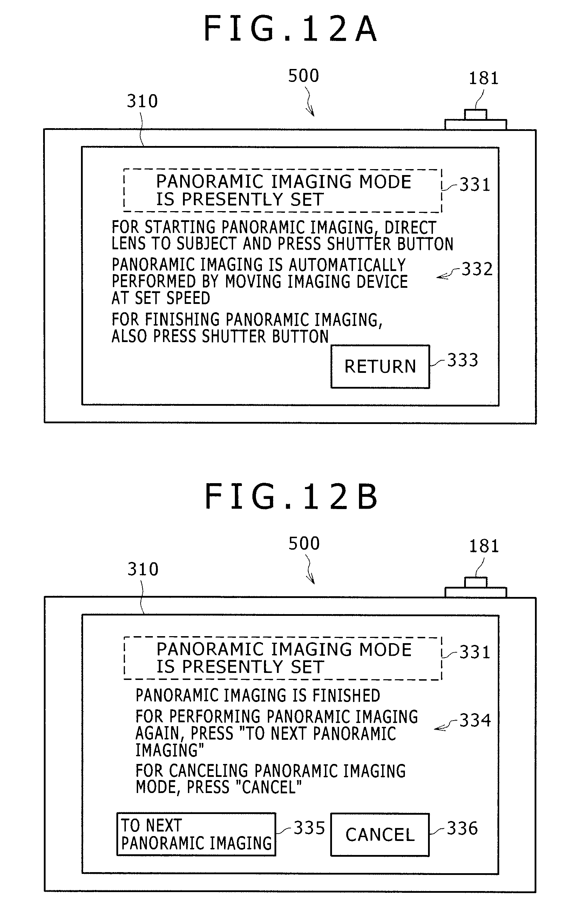

Figs. 12A and 12B are views showing displayed screens on the liquid crystal panel 310 of the imaging device 510 according to the other embodiment. Fig. 12A shows a panoramic imaging mode starting screen which is displayed when the user touches the "panoramic imaging mode" button 311 in the speed setting screen shown in Fig. 2A. In the present embodiment, the speed setting screen shown in Fig. 2B is not displayed.

The panoramic imaging mode starting screen shown in Fig. 12A, which is a screen displayed before the panoramic imaging mode is started, includes a presently set mode display area 331, a panoramic imaging mode description display area 552, and a "return" button 333. These display areas and button are displayed over captured images generated by the imager 112. The presently set mode display area 331 and the "return" button 333 are identical to those shown in Fig. 3A, and will not be described in detail below. Fig. 12B shows a panoramic imaging mode finishing screen. The panoramic imaging mode finishing screen shown in Fig. 12B is identical to the panoramic imaging mode finishing screen shown in Fig. 3B and will not be described in detail below.

The panoramic imaging mode description display area 552 is an area wherein a description of the panoramic imaging mode is displayed. In the present embodiment, the user does not need to manually enter a speed value, and the imaging device 500 does not move straight. The panoramic imaging mode description display area 552 differs from the panoramic imaging mode description display area 332 shown in Fig. 3A in that it lacks statements about a set speed and moving the vehicle linearly.

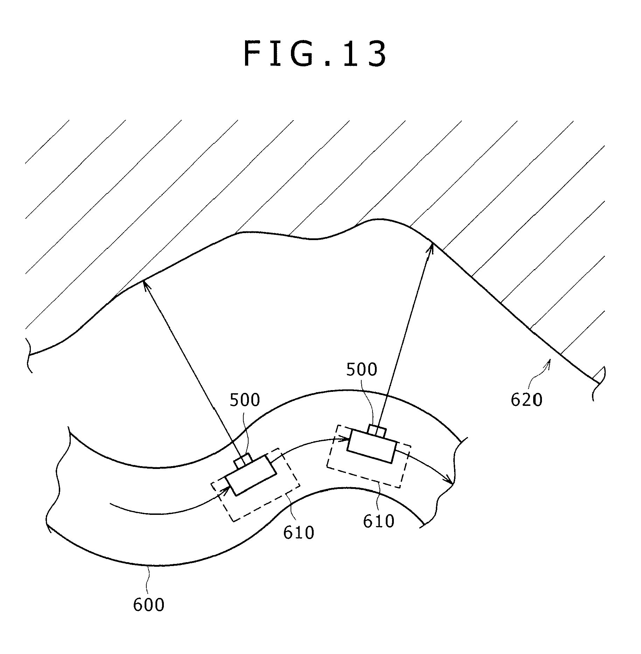

Figs. 13 and 14 show a captured image recording method for recording captured images to generate a panoramic image with the imaging device 500. Fig. 13 shows in schematic plan the manner in which a person on a vehicle 610 moving along a tortuous road 600 uses the imaging device 500 to capture images of a subject surface 620 and record the captured images as a panoramic image. The subject surface 620 which faces the imaging device 500 contains surface irregularities. In Fig. 14, the road 600 and the vehicle 610 are omitted from illustration.

It is assumed in Fig. 14 that an angle for specifying a recording range for recording a captured image at captured image recording position $P_i$ is referred to as an imaging angle $\theta_{i-1}$, and that the vehicle 500 carrying the imaging device 500 is moving along the tortuous road. When the shutter button 181 is pressed while the panoramic imaging mode starting screen shown in Fig. 12A is being displayed, the imaging device 500 records an image captured by pressing the shutter button 181. In Fig. 14, it is assumed that the shutter button 181 is pressed in captured image recording position $P_i$. An imaging range in which to capture an image when the shutter 181 is pressed has a left end or boundary whose center intersects with the subject surface 620 at point $X_{i-1}$, and a right end or boundary whose center intersects with the subject surface 620 at point $X_i$, and the imaging range whose horizontal extent is defined between points $X_{i-1}$, $X_i$ serves as the imaging range of a first captured image.

It is assumed that a next captured image recording position is represented by $P_{i+1}$, the distance from captured image recording position $P_i$ to captured image recording position $P_{i+1}$ by $L_i$, and an imaging angle at captured image recording position $P_{i+1}$ by $\theta_i$. An imaging range at captured image recording position $P_{i+1}$ has a left end or boundary whose center intersects with the subject surface 620 at point $X_i$, and a right end or boundary whose center intersects with the subject surface 620 at point $X_{i+1}$, and the imaging range whose horizontal extent is defined between points $X_i$, $X_{i+1}$ serves as the imaging range of a second captured image.

A line segment starting from captured image recording position $P_i$ and ending at captured image recording position $P_{i+1}$ is referred to as vector $L_i$ having length $L_i$. A line segment starting from captured image recording position $P_i$ and ending at point $X_i$ is referred to as vector $F_i$ having length $F_i$. A line segment starting from captured image recording position $P_{i+1}$ and ending at point $X_i$ is referred to as vector $R_i$ having length $R_i$. These vectors are related to each other according to the following equation (2):

$$\text{vector } F_i - \text{vector } L_i = \text{vector } R_i \qquad \dots(2)$$

The vectors will be described below with respect to an xy plane coordinate system having its origin (0, 0) at captured image recording position $P_i$, a y-axis extending in a direction aligned with vector $F_i$, and an x-axis extending in a direction perpendicular to vector $F_i$. On the xy plane coordinate system, it is assumed that the angle formed between vector $L_i$ and vector $F_i$ is represented by $\varphi_i$, and the angle formed between the optical axis of the imaging device 500 at captured image recording position $P_{i+1}$ and vector $F_i$ is represented by $\psi_i$. The angle formed between vector $R_i$ at captured image recording position $P_{i+1}$ and the y-axis is represented by $\psi_i - (\theta_i/2)$.

Putting the values thus defined on the xy plane coordinate system into the equation (2), the following equation (3) is satisfied:

$$(0, F_i) - (L_i \sin\varphi_i, L_i \cos\varphi_i) =$$

$$(-R_i \sin((\theta_i/2) - \psi_i), R_i \cos((\theta_i/2) - \psi_i)) \qquad \dots(3)$$

Length $L_i$ can be calculated based on the present positional information output from the GPS signal processor 510. Angles $\varphi_i$, $\psi_i$ can be calculated from the angular velocities output from the gyrosensor 520. Length $F_i$ can be specified from the subject distance output from the subject distance calculator 130. In the equation (3), length $R_i$ is unknown. By eliminating length $R_i$ from the equation (3) using an equation about x coordinates and an equation about y coordinates, the following equation (4) is satisfied:

$$L_i \sin\varphi_i \times \cos(\psi_i - (\theta_i/2))$$

$$+ (F_i - L_i \cos\varphi_i) \times \sin(\psi_i - (\theta_i/2)) = 0 \qquad \dots(4)$$

The captured image recording commander 530 determines a timing to record a captured image, using distance $L_i$ which satisfies the equation (4) and the imaging angle $\theta_i$. Since the equation (4) includes two variables $L_i$, $\theta_i$, either one of these variations need to be constant in determining a timing to record a captured image. If the distance $L_i$ from preceding captured image recording position $P_i$ to next captured image recording position $P_{i+1}$ is constant ($L_{i-1} = L_i$), then the captured image recording commander 530 sets the imaging angle $\theta_i$ to a value which satisfies the equation (4) when the present position has reached a position represented by the constant distance $L_i$. The captured image recording commander 530 outputs an instruction to record a captured image and also outputs the set imaging angle $\theta_i$ to the recording controller 540. If the imaging angle $\theta_i$ is constant ($\theta_{i-1} = \theta_i$), then the captured image recording commander 530 outputs an instruction to record a captured image and also outputs the constant imaging angle $\theta_i$ to the recording controller 540 when the present position has reached a position represented by the distance $L_i$ which satisfies the equation (4). Timings to recording captured images at subsequent captured image recording positions $P_{i+2}$, $P_{i+3}$, .., can similarly be determined.

If the imaging device 500 moves straight, then $\theta_i = \theta$, $\varphi_i = \Pi/2 - \theta/2$, and $\psi_i = -\theta/2$. By putting these values into the equation (4), the equation (4) becomes equal to the equation (1). Therefore, the example shown in Fig. 14 is applicable to a situation where the imaging device 500 moves straight.

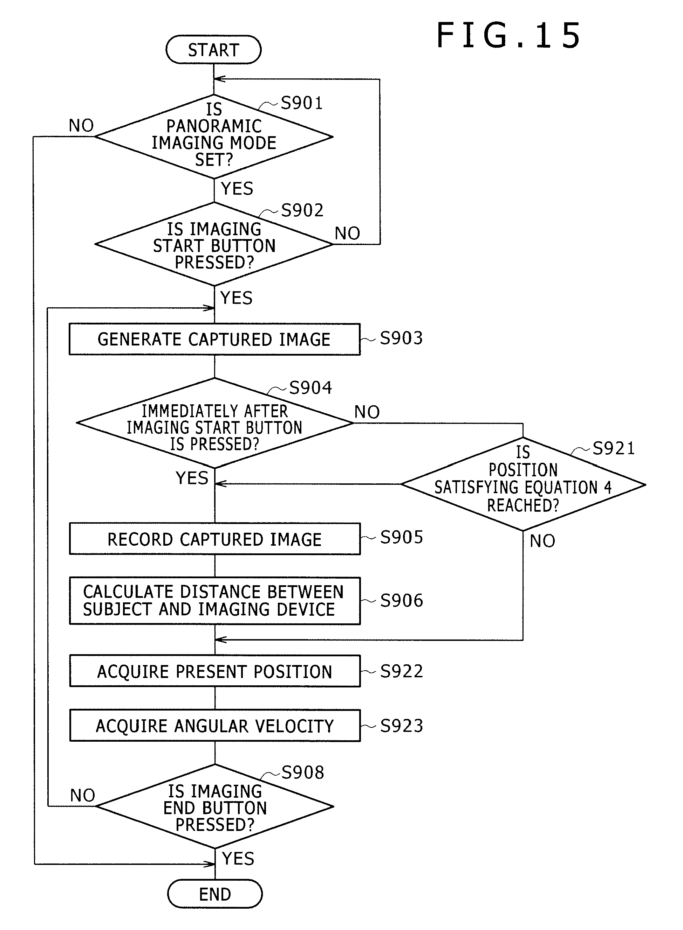

Operation of the imaging device 500 according to the present embodiment will be described below with reference to Fig. 15.

Fig. 15 is a flowchart of a processing sequence of a panoramic image recording process carried out by the imaging device 500 according to the present embodiment. The processing sequence shown in Fig. 15, which is a modification of the processing sequence shown in Fig. 8, includes steps S901 through S906, S908 which are identical to those shown in Fig. 8, and also includes S921, S922, S923 according to the present embodiment. Those identical steps will not be described in detail below. According to the processing sequence shown in Fig. 15, it is assumed that the imaging angle is constant.

If the present time is not immediately after the imaging start button is pressed (No in step S904), then the captured image recording commander 530 determines whether the present position has reached a position which satisfies the equation (4) or not, based on the subject distance output from the subject distance calculator 130, the positional information output from the GPS signal processor 510, and the angular velocities output from the gyrosensor 520. If the present position has reached a position which satisfies the equation (4) (Yes in step S921), then control goes to step S905.

If the present position has not reached a position which satisfies the equation (4) (No in step S921), then the GPS signal processor 510 acquires positional information (step S922), and the gyrosensor 520 acquires angular velocities (step S923).

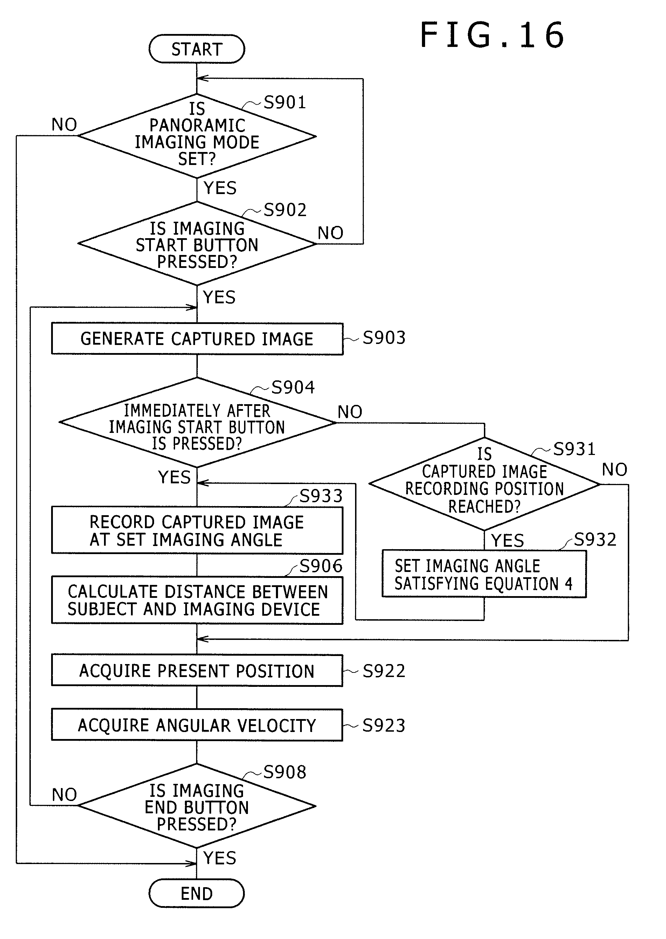

Fig. 16 is a flowchart of a processing sequence of another panoramic image recording process carried out by the imaging device 500 according to the present embodiment. The processing sequence shown in Fig. 16, which is a modification of the processing sequence shown in Fig. 15, includes steps S901 through S904, S906, S908, S922, S923 which are identical to those shown in Fig. 15, and also includes S931, S932, S933 according to the present embodiment. Those identical steps will not be described in detail below. According to the processing sequence shown in Fig. 16, it is assumed that the distance from the preceding captured image recording position to the next captured image recording position is constant.

If the present time is not immediately after the imaging start button is pressed (No in step S904), then the captured image recording commander 530 determines whether the present position has reached a position which is represented by the constant distance or not, based on the positional information output from the GPS signal processor 510. If the present position has reached a position which is represented by the constant distance (Yes in step S931), then the captured image recording commander 530 sets an imaging angle which satisfies the equation (4) based on the subject distance output from the subject distance calculator 130 and the angular velocities output from the gyrosensor 520 (step S932). Then, the recording controller 540 determines a recording range for the captured image based on the set imaging angle, and records the captured image in the determined recording range in the image storage 200 (step S933). If the present time is immediately after the imaging start button is pressed (Yes in step S904), then the recording controller 540 determines a recording range for the captured image based on the set imaging angle, and records the captured image in the determined recording range in the image storage 200 (step S933). If the present position has not reached a position which is represented by the constant distance (No in step S931), then control goes to step S922.

If a vehicle is used as a moving apparatus for moving the imaging device which records captured images for generating a panoramic image, then the vehicle tends to vibrate vertically due to surface irregularities of the road on which the vehicle is moving. In addition, the imaging device may vibrate along its optical axis as it is carried by the hands of the user. A process of correcting captured images against vibrations or small movements of the imaging device for generating an appropriate panoramic image will be described below.

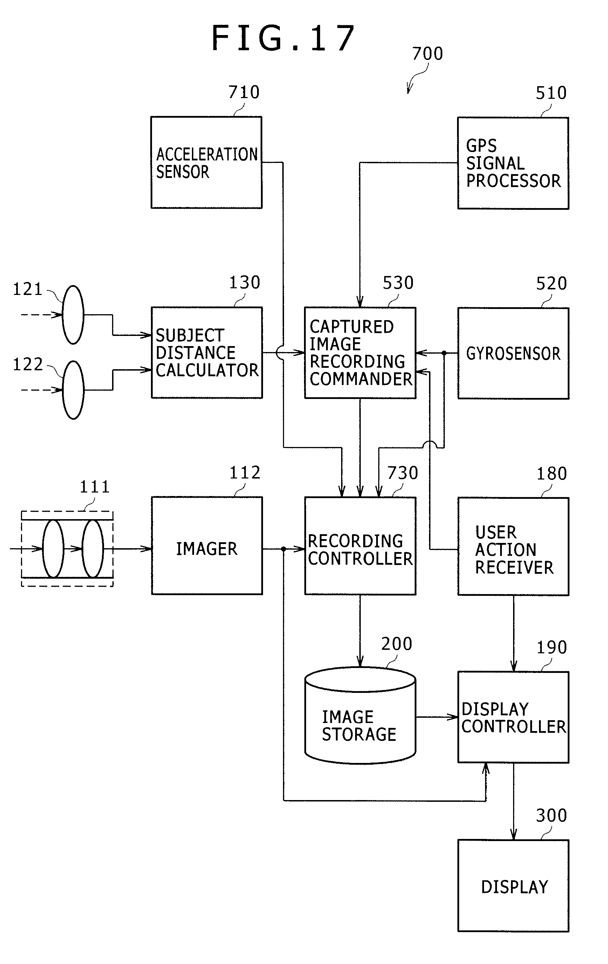

Fig. 17 is a block diagram of a functional configuration of an imaging device 700 according to still another embodiment of the present invention. The imaging device 700, which is a modification of the imaging device 500 shown in Fig. 11, is different from the imaging device 500 in that it includes a recording controller 730 instead of the recording controller 540 and additionally has an acceleration sensor 710. Those parts of the imaging device 700 which are identical to those of the imaging device 500 shown in Fig. 11 will not be described in detail below. Those details of the imaging device 700 which are different from the imaging device 500 will mainly be described below.

The gyrosensor 520 outputs detected angular velocities to the captured image recording commander 530 and the recording controller 730. The gyrosensor 520 serves as an example of a vibration detector as claimed.

The acceleration sensor 710 includes an acceleration sensor for detecting accelerations (a change in speed per unit time) along three axes which extend perpendicularly to each other. The acceleration sensor 710 outputs the detected accelerations to recording controller 730. The acceleration sensor 710 serves as an example of a vibration detector as claimed.

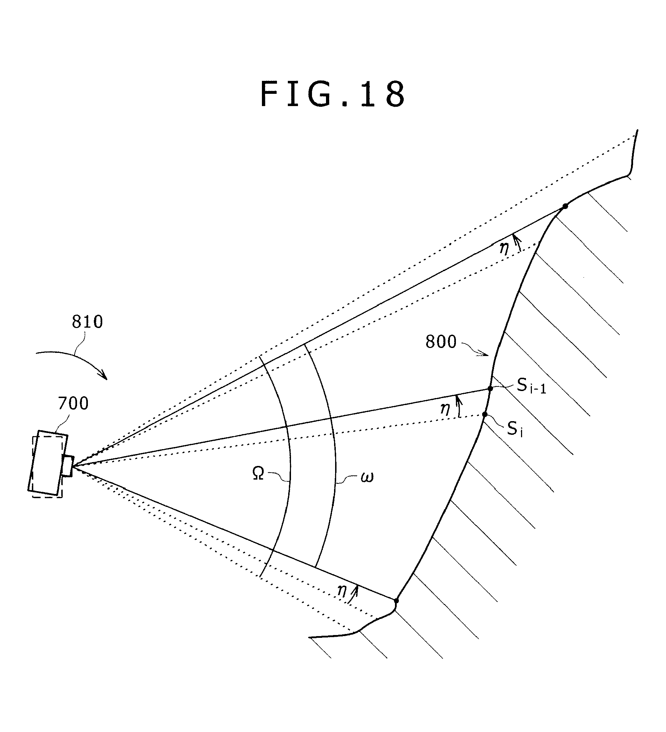

When the recording controller 730 is instructed to record a captured image by the captured image recording commander 530, the recording controller 730 records the captured image, which is output from the imager 112 at the time the recording controller 730 is instructed to record same, in the image storage 200. When the captured image is to be recorded, the recording controller 730 corrects the captured image based on the angular velocities output from the gyrosensor 520 and the acceleration output from the acceleration sensor 710, and records the corrected captured image in the image storage 200. Details of a process of correcting the captured image will be described below with reference to Figs. 18 through 21. The recording controller 730 serves as an example of a corrector as claimed.

First, a captured image correcting process in which the imaging device 700 turns or oscillates about a horizontal axis across the optical axis thereof will be described in detail below with reference to Fig. 18. In Figs. 18 through 20, the imaging device 700 has its right side facing the viewer, and a subject surface 800 is a slanted surface such as a mountainside.

Fig. 18 is a view showing a captured image correcting process to be performed at the time the imaging device 700 turns or oscillates about a horizontal axis across the optical axis thereof. In Fig. 18, it is assumed that a captured image is recorded in an imaging angle $\omega$ which is smaller than an angle $\Omega$ of view that represents an imageable range. The imaging device 700 before it turns is indicated by the dotted lines, and the imaging device 700 after it turns is indicated by the solid lines. A point on the subject surface 800 up to which the distance from the imaging device 700 is measured is referred to as a ranging point. The ranging point before the imaging device 700 turns is indicated by $S_{i-1}$. The ranging point which is predicted if the captured image correcting process is not carried out after the imaging device 700 turns is indicated by $S_i$.

When the imaging device 700 turns in the direction indicated by the arrow 810 through an angle $\eta$, the recording controller 730 corrects the captured image in a direction to cancel the angle $\eta$. The angle $\eta$ can be detected by the gyrosensor 520. In other words, even when the imaging device 700 turns in the direction indicated by the arrow 810 through the angle $\eta$, the captured image can be recorded in the same vertical recording range as before the imaging device 700 turns, by correcting the captured image using the correcting angle $\eta$.

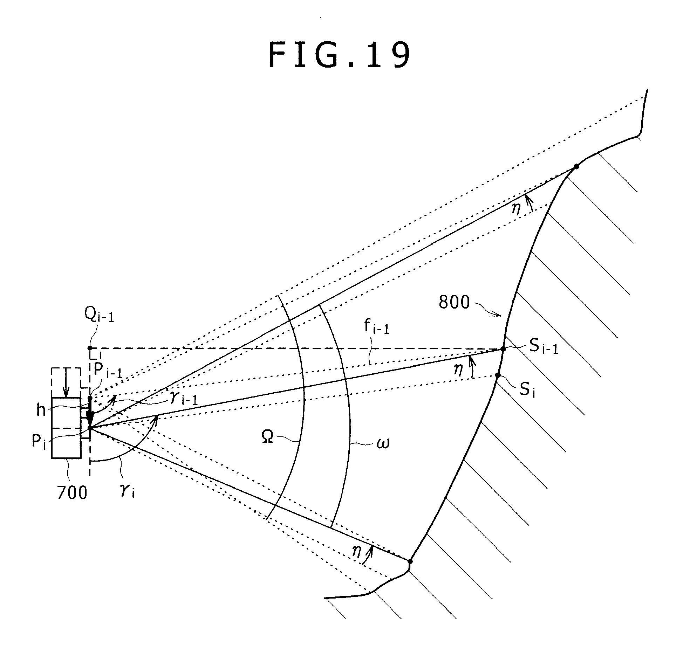

A captured image correcting process in which the imaging device 700 moves vertically will be described in detail below with reference to Fig. 19.

Fig. 19 is a view showing a captured image correcting process to be performed at the time the imaging device 700 moves or oscillates vertically. In Fig. 19, it is assumed that a captured image is recorded in the imaging angle $\omega$. The imaging device 700 before it moves is indicated by the dotted lines, and the imaging device 700 after it moves is indicated by the solid lines. The ranging point before the imaging device 700 moves is indicated by $S_{i-1}$. The ranging point which is predicted if the captured image correcting process is not carried out after the imaging device 700 moves is indicated by $S_i$.

As shown in Fig. 19, the imaging device 700 moves downwardly by a distance h from a position $P_{i-1}$ to a position $P_i$. For correcting the vertical shift, a correcting angle may be determined by correcting the vertical shift based on the ranging point $S_{i-1}$.

It is assumed that a vertical angle $\gamma_{i-1}$ with respect to the ranging point $S_{i-1}$ at the position $P_{i-1}$ of the imaging device 700 before it moves is preset. The subject distance $f_{i-1}$ at the position $P_{i-1}$ of the imaging device 700 before it moves is determined by the imager 112. The distance h can be detected by the acceleration sensor 710. A point where a straight line extending parallel to the optical axis from the ranging point $S_{i-1}$ intersects with a vertical straight line passing through the position $P_{i-1}$ is indicated by $Q_{i-1}$. The straight line $S_{i-1}Q_{i-1}$ and the straight line $Q_{i-1}P_i$ are determined by the following equations (5), (6):

$$S_{i-1}Q_{i-1} = f_{i-1} \times \sin\gamma_{i-1} \qquad \ldots(5)$$

$$Q_{i-1}P_i = h + Q_{i-1}P_{i-1} = h - f_{i-1} \times \cos\gamma_{i-1} \qquad \ldots(6)$$

Since tan $(\Pi - \gamma_i)$ = $S_{i-1}Q_{i-1}/Q_{i-1}P_i$ is satisfied for a triangle $S_{i-1}Q_{i-1}P_i$, an angle $\gamma_i$ is determined by the following equation:

$$\gamma_i = \Pi - \tan^{-1}(S_{i-1}Q_{i-1}/Q_{i-1}P_i)$$

$$= \Pi - \tan^{-1}\{(f_{i-1} \times \sin\gamma_{i-1})/(h - f_{i-1} \times \cos\gamma_{i-1})\}$$

Using the angle $\gamma_i$ thus determined, the correcting angle $\eta$ is determined according to the following equation (7) :

$$\eta = \gamma_i - \gamma_{i-1}$$

$$= \Pi - \tan^{-1}\{(f_{i-1} \times \sin\gamma_{i-1})$$

$$/ (h - f_{i-1} \times \cos\gamma_{i-1})\} - \gamma_{i-1} \qquad \ldots(7)$$

The captured image can be recorded in the same vertical recording range as before the imaging device 700 moves, by correcting the captured image using the correcting angle $\eta$ thus determined.

A captured image correcting process in which the imaging device 700 moves slightly along the optical axis thereof will be described below.

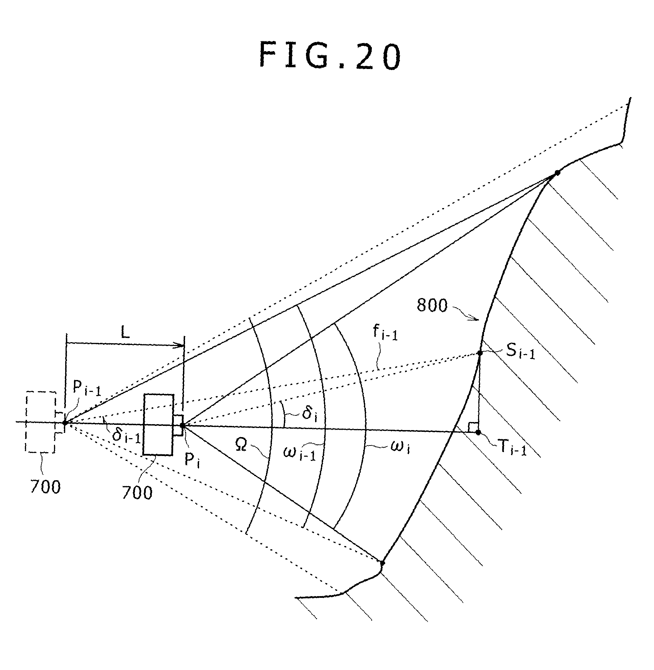

Fig. 20 is a view showing a captured image correcting process to be performed at the time the imaging device 700 moves or oscillates along the optical axis thereof. In Fig. 20, it is assumed that the imaging device 700 records a captured image at an imaging angle $\omega_{i-1}$. The imaging device 700 before it moves is indicated by the dotted lines, and the imaging device 700 after it moves is indicated by the solid lines. The ranging point of the imaging device 700 is indicated by $S_{i-1}$. In this captured image correcting process, a correcting angle is calculated using an approximating equation.

As shown in Fig. 20, the imaging device 700 moves along the optical axis by a distance L from a position $P_{i-1}$ to a position $P_i$. For correcting the shift along the optical axis, a correcting angle may be determined by correcting the shift along the optical axis based on the ranging point $S_{i-1}$.

It is assumed that an angle $\delta_{i-1}$ from the optical axis with respect to the ranging point $S_{i-1}$ at the position $P_{i-1}$ of the imaging device 700 before it moves is preset. The subject distance $f_{i-1}$ at the position $P_{i-1}$ of the imaging device 700 before it moves is determined by the imager 112. A point where a straight line extending downwardly from the ranging point $S_{i-1}$ intersects with a straight line extending along the optical axis and passing through the positions $P_{i-1}$, $P_i$ is indicated by $T_{i-1}$. The following equation (8) with respect to $\delta_i$ for a triangle $S_{i-1}T_{i-1}P_i$ is satisfied:

$$\tan\delta_i = f_{i-1} \times \sin\delta_{i-1} \div (f_{i-1} \times \cos\delta_{i-1} - L)$$

$$\ldots(8)$$

If the gradient of the subject surface 800 is nearly vertical and a change in $\omega_i$ ($\Delta\omega = \omega_i - \omega_{i-1}$) and a change in $\delta_i$ ($\Delta\delta = \delta_i - \delta_{i-1}$) are of sufficiently small values, then the following approximating equation is satisfied:

$$\omega_i = \omega_{i-1} \times (\delta_i/\delta_{i-1})$$

Using the above approximating equation, the imaging angle $\omega_i$ of the imaging device 700 after it moves is calculated according to the following equation (9):

$$\omega_i = \omega_{i-1} \times [\tan^{-1}\{f_{i-1} \times \sin\delta_{i-1}$$

$$\div (f_{i-1} \times \cos\delta_{i-1} - L)\}/ \delta_{i-1}] \qquad \ldots(9)$$

The captured image can be recorded in the same vertical recording range as before the imaging device 700 moves, by correcting the captured image using the imaging angle $\omega_i$ thus determined.

The three captured image correcting processes have been described above with reference to Figs. 18 through 20. These captured image correcting processes may be performed simultaneously, and may be combined with other captured image correcting processes or other captured image correcting processes may be performed to correct the captured image against vibrations or small movements of the imaging device 700.

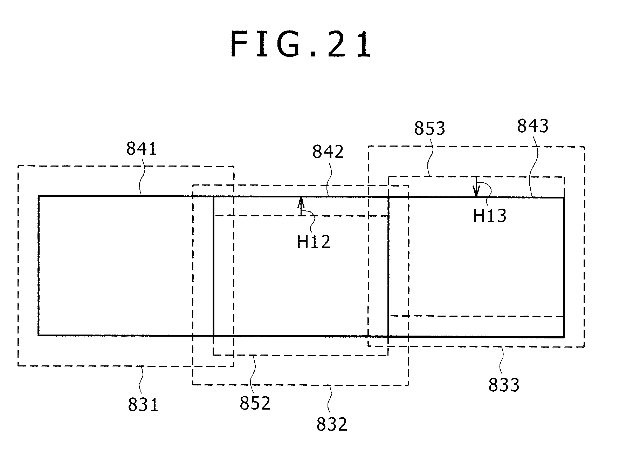

Fig. 21 is a view showing captured images to be corrected by recording controller 730 of the imaging device 700. In Fig. 21, a panoramic image is generated using three captured images that are successively recorded. The recording controller 730 records a first captured image in a recording range 841 which is smaller than an imageable range 831. In a next captured image recording position, the imaging device 700 moves downwardly, as shown in Fig. 19. The recording controller 730 then moves a recording range 852 which is specified by an ordinary imaging angle, by a corrective distance H12 in an imageable range 832, and records a captured image in a recording range 842. In a next captured image recording position, the imaging device 700 moves upwardly. The recording controller 730 then moves a recording range 853 which is specified by an ordinary imaging angle, by a corrective distance H13 in an imageable range 833, and records a captured image in a recording range 843.

Even when vibrations are applied to the imaging device 700, the imaging device 700 can correct captured images according to the above correcting process for aligning joints of areas at upper and lower ends of the captured images.

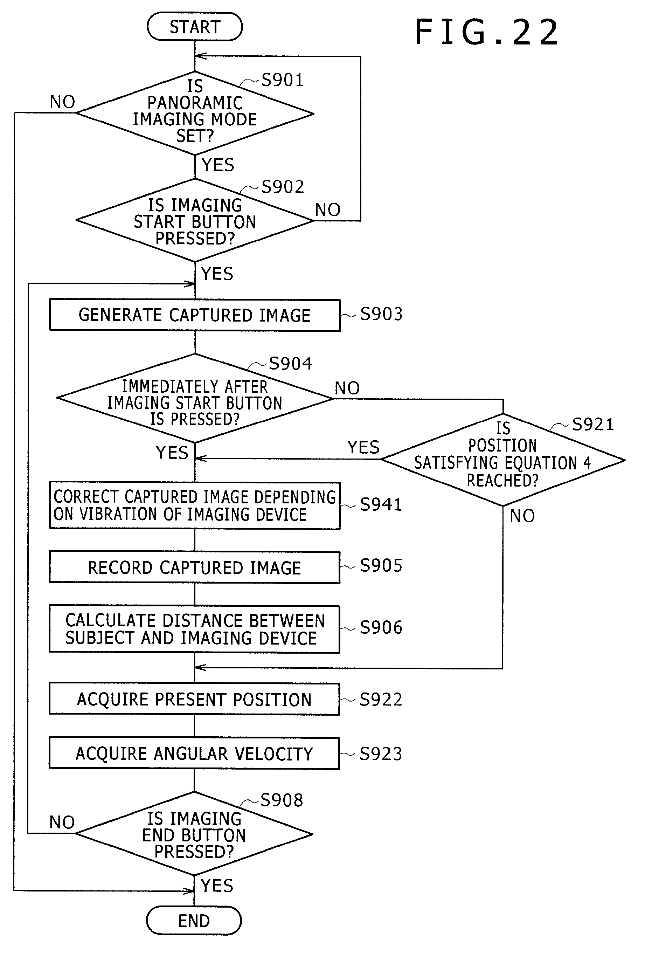

Operation of the imaging device 700 according to the present embodiment will be described below with reference to Fig. 22.

Fig. 22 is a flowchart of a processing sequence of a panoramic image recording process carried out by the imaging device 700. The processing sequence shown in Fig. 22, which is a modification of the processing sequence shown in Fig. 15, includes steps S901 through S906, S908, S921 through S923 which are identical to those shown in Fig. 15, and also includes step S941 according to the present embodiment. Those identical steps will not be described in detail below.

If the present time is immediately after the imaging start button is pressed (Yes in step S904), or if the present position has reached a position which satisfies the equation (4) (Yes in step S921), then the captured image recording commander 530 outputs an instruction to record a captured image to the recording controller 730. The recording controller 730 corrects the captured image generated by the imager 112 based on the angular velocities output from the gyrosensor 520 and the acceleration output from the acceleration sensor 710 (step S941). Then, the recording controller 730 records the corrected captured image in the image storage 200 (step S905).

According to the embodiments of the present invention, as described above, for generating a panoramic image, captured images free of overlapping areas are successively recorded without the need for image processing such as trimming. Therefore, a panoramic image can quickly be recorded without any special image processing. Since a panoramic image is displayed using all the recorded captured images, image data are prevented from being wasted. Furthermore, if a series of captured images are to be displayed as a panoramic image, then they can be displayed as a panoramic image simply by being displayed in the recorded sequence. Consequently, the panoramic image can simply be displayed without any special image processing. Processing burdens imposed for recording and displaying a panoramic image are thus reduced. A small-size digital still camera, a cellular phone, etc. can generate a panoramic image without the need for any device for performing special image processing. If captured images that are recorded as a panoramic image in the image storage 200 are to be displayed by a personal computer, for example, then the personal computer can simply display a panoramic image without the need for any device for performing special image processing.

In the embodiments of the present invention, a vehicle has been described as a moving apparatus for moving the imaging device. However, the imaging device may be moved by a moving apparatus such as a train or the like. Alternatively, the imaging device may be moved by a moving apparatus such as a radio-controlled car or the like under wireless control.

In some of the embodiments of the invention, the imaging device has the GPS signal processor as the present position acquirer. Instead, GPS information may be acquired from a car navigation system or the like incorporated in the vehicle which carries the imaging device. The gyrosensor is used as a device for detecting angular displacements of the imaging device. However, a sensor such as a geomagnetic sensor may be used as such a device.

In the embodiments of the invention, the subject distance is calculated by the subject distance calculator 130 according to the principles of the triangulation ranging process. If the speed at which the imaging device moves is sufficiently low, then the subject distance may be measured according to an AF (automatic focusing) distance measuring process. Specifically, for recording a captured image, the imaging device is focused on the central position of the captured image according to an AF process, and immediately before or after the captured image is recorded, the subject distance used to calculate a captured image recording position is calculated according to the AF process.

The principles of the invention are applicable to an imaging device such as a camcorder (camera and recorder), a cellular phone with an imager, or the like.

Although certain preferred embodiments of the present invention have been shown and described in detail, it should be understood that various changes and modifications may be made therein without departing from the scope of the appended claims.

Each of the processing sequences according to the embodiments of the invention may be grasped as a method for carrying out the processing sequence, a program for enabling a computer to carry out the processing sequence, or a recording medium storing such a program. The recording medium may comprise a CD (Compact Disc), an MD (MiniDisc), a DVD (Digital Versatile Disk), a memory card, a Blu-ray Disc (registered trademark), or the like.

The present application contains subject matter related to that disclosed in Japanese Priority Patent Application JP 2008-102942 filed in the Japan Patent Office on April 10, 2008, the entire content of which is hereby incorporated by reference.

**Claims**

1. An imaging device, comprising:

   an imager configured to image a subject to generate a captured image thereof;
   a subject distance calculator configured to calculate a subject distance up to said subject;
   a captured image recording commander configured to give a recording instruction to record said captured image based on a present position and said subject distance; and
   a recording controller configured to record said captured image based on said recording instruction.

2. The imaging device according to claim 1, further comprising:

   a captured image recording position calculator configured to calculate, based on said subject distance, a captured image recording position which is a position to record a second captured image generated by said imager after said captured image is recorded;

   wherein said captured image recording commander gives a recording instruction to record said second captured image when said imaging device reaches said captured image recording position.

3. The imaging device according to claim 2, further comprising:

   a traveled distance acquirer configured to acquire a traveled distance in a particular direction of said imaging device, wherein
   said subject distance calculator calculates, as said subject distance, a distance up to an end in said particular direction of the subject included in said captured image,
   said captured image recording position calculator calculates said captured image recording position in said particular direction based on said subject distance, and
   said captured image recording commander determines whether said imaging device reaches said captured image recording position or not based on the acquired traveled distance, and gives the recording instruction to record said second captured image if said imaging device reaches said captured image recording position.

4. The imaging device according to claim 2 or 3, further comprising:

   a present position acquirer configured to acquire a present position in a particular direction of said imaging device, wherein
   said subject distance calculator calculates, as said subject distance, a distance up to an end in said particular direction of the subject included in said captured image,
   said captured image recording position calculator calculates said captured image recording position in said particular direction based on said subject distance, and
   said captured image recording commander gives the recording instruction to record said second captured image if the acquired present position reaches said captured image recording position.

5. The imaging device according to one of the claims 1 to 4, further comprising:

   a present position acquirer configured to acquire said present position; and
   an angular displacement detector configured to detecte an angular displacement of said imaging device about a vertical axis thereof, wherein
   said subject distance calculator calculates, as said subject distance, a distance up to an end in a particular direction of the subject included in said captured image; and
   said captured image recording commander gives a recording instruction to record a second captured image generated by said imager after said captured image is recorded, based on the acquired present position and the detected angular displacement.

6. The imaging device according to claim 5, wherein said captured image recording commander makes constant an imaging angle which is an angle to specify a recording range for the captured image, and gives the recording instruction to record the second captured image if the acquired present position reaches a position to record said second captured image which is determined based on said subject distance and the detected angular displacement.

7. The imaging device according to claim 5 or 6, wherein said captured image recording commander makes constant a captured image recording position which is a position to record said second captured image, determines an imaging angle which is an angle to specify a recording angle for the captured image based on the subject distance and the detected angular displacement if the acquired present position reaches said captured image recording position, and gives the recording instruction to record the second captured image in the recording range specified by the determined imaging angle.

8. The imaging device according to one of the claims 1 to 7, further comprising:

    a vibration detector configured to detecte vibration of the imaging device; and
    a corrector configured to correct a vertical recording range for the captured image based on the detected vibration.

9. The imaging device according to one of the claims 1 to 8, further comprising:

    a display controller configured to display captured images in a recorded sequence as a panoramic image.

10. A method of recording captured images, comprising the steps of:

    imaging a subject to generate a captured image thereof;
    calculating a subject distance up to said subject;
    giving a recording instruction to record said captured image based on said subject distance; and
    recording said captured image based on said recording instruction.

11. A program for enabling a computer to perform a processing sequence comprising the steps of:

    imaging a subject to generate a captured image thereof;
    calculating a subject distance up to said subject;
    giving a recording instruction to record said captured image based on said subject distance; and
    recording said captured image based on said recording instruction.

# FIG. 1

```
                    140                                    150
        ┌──────────────┐                          ┌──────────────┐
        │ CAPTURED     │                          │              │
        │ IMAGE        │                          │    TIMER     │
        │ RECORDING    │                          │              │
        │ POSITION     │                          └──────┬───────┘
        │ CALCULATOR   │                                 │
        └──────┬───────┘                                 ▼
               ▲                                   160
  121          │        130          170          ┌──────────────┐
   ◯           │  ┌──────────┐  ┌──────────┐      │ TRAVELED     │
        ┌──────┴─►│ SUBJECT  │  │ CAPTURED │◄─────│ DISTANCE     │
   122  │         │ DISTANCE │  │ IMAGE    │      │ CALCULATOR   │
   ◯────┘         │ CALCULATOR│ │ RECORDING│◄──┐  └──────────────┘
                  └──────────┘  │ COMMANDER│   │         ▲
                                └────┬─────┘   │
                                     │         │
        111          112       113   ▼         │   180
     ┌──────┐   ┌──────────┐  ┌──────────┐  ┌──────────┐
     │ ◯ ◯  │──►│  IMAGER  │─►│ RECORDING│  │ USER     │
     └──────┘   └────┬─────┘  │CONTROLLER│  │ ACTION   │
                     │        └────┬─────┘  │ RECEIVER │
                     │             │        └────┬─────┘
                     │        200  ▼             │   190
                     │        ┌─────────┐  ┌──────────┐
                     │        │ IMAGE   │─►│ DISPLAY  │
                     │        │ STORAGE │  │CONTROLLER│
                     │        └─────────┘  └────┬─────┘
                     └─────────────────────────►│    │
                                                │  300▼
                                           ┌──────────┐
                                           │ DISPLAY  │
                                           └──────────┘
```

100

# FIG.2A

100

181

310

MODE SETTING MENU

PRESS BUTTON FOR MODE TO BE SET

311 — PANORAMIC IMAGING MODE

PANORAMIC DISPLAY MODE — 312

313 — PORTRAIT IMAGING MODE

LANDSCAPE IMAGING MODE — 314

RETURN — 315

# FIG.2B

100

181

310

SELECT SPEED FOR PANORAMIC IMAGING, AND PRESS "CONFIRM"

322

321 —   50   ▽   km/h

CONFIRM — 323   RETURN — 324

# FIG.3A

310　　　　　　　100　　　　　　　181

┌─────────────────────────────┐
│ ┌─────────────────────────┐ │
│ │ PANORAMIC IMAGING MODE   │ ⌐331 │
│ │    IS PRESENTLY SET      │ │
│ └─────────────────────────┘ │
│ FOR STARTING PANORAMIC IMAGING, DIRECT │
│ LENS TO SUBJECT AND PRESS SHUTTER BUTTON │
│ PANORAMIC IMAGING IS AUTOMATICALLY │
│ PERFORMED BY LINEARLY MOVING IMAGING  ⟵332 │
│ DEVICE AT SET SPEED │
│ FOR FINISHING PANORAMIC IMAGING, │
│ ALSO PRESS SHUTTER BUTTON │
│                    ┌──────────┐ │
│                    │ RETURN   │ ⌐333 │
│                    └──────────┘ │
└─────────────────────────────┘

# FIG.3B

310　　　　　　　100　　　　　　　181

┌─────────────────────────────┐
│ ┌─────────────────────────┐ │
│ │ PANORAMIC IMAGING MODE   │ ⌐331 │
│ │    IS PRESENTLY SET      │ │
│ └─────────────────────────┘ │
│ PANORAMIC IMAGING IS FINISHED │
│ FOR PERFORMING PANORAMIC IMAGING │
│ AGAIN, PRESS "TO NEXT PANORAMIC   ⟵334 │
│ IMAGING" │
│ FOR CANCELING PANORAMIC IMAGING │
│ MODE, PRESS "CANCEL" │
│ ┌──────────────┐       ┌──────────┐ │
│ │ TO NEXT      │ ⌐335  │ CANCEL   │ ⌐336 │
│ │ PANORAMIC IMAGING │  └──────────┘ │
│ └──────────────┘ │
└─────────────────────────────┘

# FIG.4

# FIG.5A

SHUTTER BUTTON
PRESSED FOR
FIRST TIME

SHUTTER BUTTON
PRESSED FOR
SECOND TIME

# FIG.5B

# FIG.6

| PANORAMA IMAGE ID | IMAGING SEQUENCE NUMBER | CAPTURED IMAGE |
|---|---|---|
| #1 | 1 | A 431 |
| #1 | 2 | B 432 |
| #1 | 3 | C 433 |
| #2 | 1 | E |
| #2 | ⋮ | ⋮ |
| #3 | 1 | F |
| #3 | ⋮ | ⋮ |
| ⋮ | ⋮ | ⋮ |

201    202    200    203

# FIG.7A

100

181

310

PRESS IMAGE TO BE DISPLAYED
AS PANORAMIC IMAGE

| A | E | F |

451        452        453

RETURN    315

# FIG.7B

100

181

310

431        432        433

| A | B | C |

RETURN    315

# FIG.8

```
                        START

                          │
                          ▼
        NO         ┌──────────────┐  ~S901
    ◄──────────────│      IS      │
                   │  PANORAMIC   │
                   │ IMAGING MODE │
                   │     SET?     │
                   └──────────────┘
                        │ YES
                        ▼
                   ┌──────────────┐  ~S902
                   │   IS IMAGING │     NO
                   │ START BUTTON │────────►
                   │   PRESSED?   │
                   └──────────────┘
                        │ YES
                        ▼
        ┌─────────────────────────────┐  ~S903
        │   GENERATE CAPTURED IMAGE   │
        └─────────────────────────────┘
                        │
                        ▼
        ┌─────────────────────────────┐  ~S904
        │     IMMEDIATELY AFTER       │   NO
        │  IMAGING START BUTTON       │────────►  S909
        │      IS PRESSED?            │
        └─────────────────────────────┘       ┌──────────────────────────┐
                        │ YES                  │ CALCULATE TRAVELED DISTANCE│
                        ▼                      │ FROM PRECEDING CAPTURED    │
        ┌─────────────────────────────┐  ~S905│ IMAGE RECORDING POSITION   │
        │     RECORD CAPTURED IMAGE   │       └──────────────────────────┘
        └─────────────────────────────┘                   │
                        │            ~S906                 ▼
        ┌─────────────────────────────┐        ┌──────────────┐  ~S910
        │ CALCULATE DISTANCE BETWEEN  │  YES   │   IS NEXT    │
        │ SUBJECT AND IMAGING DEVICE  │◄───────│  CAPTURED    │
        └─────────────────────────────┘        │    IMAGE     │
                        │                       │  RECORDING   │
                        ▼                       │  POSITION    │
        ┌─────────────────────────────┐        │  REACHED?    │
        │  CALCULATE NEXT CAPTURED    │ ~S907  └──────────────┘
        │ IMAGE RECORDING POSITION    │              │ NO
        └─────────────────────────────┘              │
                        │◄───────────────────────────┘
                        ▼
        NO         ┌──────────────┐  ~S908
    ◄──────────────│   IS IMAGING │
                   │  END BUTTON  │
                   │   PRESSED?   │
                   └──────────────┘
                        │ YES
                        ▼
                        END
```

25

# FIG.9

102

140

CAPTURED IMAGE RECORDING POSITION CALCULATOR

121

122

130

SUBJECT DISTANCE CALCULATOR

470

CAPTURED IMAGE RECORDING COMMANDER

460

GPS SIGNAL PROCESSOR

111

112

IMAGER

113

RECORDING CONTROLLER

180

USER ACTION RECEIVER

200

IMAGE STORAGE

190

DISPLAY CONTROLLER

300

DISPLAY

# FIG.10

# FIG.11

500

510

GPS SIGNAL PROCESSOR

121

122

130

SUBJECT DISTANCE CALCULATOR

530

CAPTURED IMAGE RECORDING COMMANDER

520

GYROSENSOR

111

112

IMAGER

540

RECORDING CONTROLLER

180

USER ACTION RECEIVER

200

IMAGE STORAGE

190

DISPLAY CONTROLLER

300

DISPLAY

# FIG.12A

500    181

310

PANORAMIC IMAGING MODE
IS PRESENTLY SET    331

FOR STARTING PANORAMIC IMAGING, DIRECT
LENS TO SUBJECT AND PRESS SHUTTER BUTTON

PANORAMIC IMAGING IS AUTOMATICALLY
PERFORMED BY MOVING IMAGING DEVICE    332
AT SET SPEED

FOR FINISHING PANORAMIC IMAGING,
ALSO PRESS SHUTTER BUTTON

RETURN    333

# FIG.12B

500    181

310

PANORAMIC IMAGING MODE
IS PRESENTLY SET    331

PANORAMIC IMAGING IS FINISHED

FOR PERFORMING PANORAMIC IMAGING    334
AGAIN, PRESS "TO NEXT PANORAMIC
IMAGING"

FOR CANCELING PANORAMIC IMAGING
MODE, PRESS "CANCEL"

TO NEXT
PANORAMIC IMAGING    335    CANCEL    336

# FIG.13

# FIG.14

FIG.15

START

IS PANORAMIC IMAGING MODE SET? — S901
— NO
— YES

IS IMAGING START BUTTON PRESSED? — S902
— NO
— YES

GENERATE CAPTURED IMAGE — S903

IMMEDIATELY AFTER IMAGING START BUTTON IS PRESSED? — S904
— NO
— YES

IS POSITION SATISFYING EQUATION 4 REACHED? — S921
— NO

RECORD CAPTURED IMAGE — S905

CALCULATE DISTANCE BETWEEN SUBJECT AND IMAGING DEVICE — S906

ACQUIRE PRESENT POSITION — S922

ACQUIRE ANGULAR VELOCITY — S923

IS IMAGING END BUTTON PRESSED? — S908
— NO
— YES

END

# FIG.16

START

IS PANORAMIC IMAGING MODE SET? — S901 — NO

YES

IS IMAGING START BUTTON PRESSED? — S902 — NO

YES

GENERATE CAPTURED IMAGE — S903

IMMEDIATELY AFTER IMAGING START BUTTON IS PRESSED? — S904 — NO

IS CAPTURED IMAGE RECORDING POSITION REACHED? — S931 — NO

YES

YES — S932

SET IMAGING ANGLE SATISFYING EQUATION 4

RECORD CAPTURED IMAGE AT SET IMAGING ANGLE — S933

CALCULATE DISTANCE BETWEEN SUBJECT AND IMAGING DEVICE — S906

ACQUIRE PRESENT POSITION — S922

ACQUIRE ANGULAR VELOCITY — S923

IS IMAGING END BUTTON PRESSED? — S908 — NO

YES

END

# FIG.17

# FIG.18

# FIG.19

# FIG.20

# FIG.21

# FIG.22

```
        ( START )
            │
            ▼
      ┌─────────────┐
      │     IS      │  ╭S901
  NO  │  PANORAMIC  │
◄─────│ IMAGING MODE│
      │    SET?      │
      └─────────────┘
         │ YES
         ▼
      ┌─────────────┐
      │ IS IMAGING  │  ╭S902
      │ START BUTTON│───── NO
      │  PRESSED?   │
      └─────────────┘
         │ YES
         ▼
  ┌──────────────────────────┐
  │  GENERATE CAPTURED IMAGE │ ╭S903
  └──────────────────────────┘
            │
            ▼
      ┌──────────────────┐
      │ IMMEDIATELY AFTER│ ╭S904              ┌──────────────────┐
      │ IMAGING START    │───────── NO ──────►│       IS         │ ╭S921
      │ BUTTON IS PRESSED?│                    │    POSITION      │
      └──────────────────┘      ◄─── YES ──────│SATISFYING EQUATION 4│
            │ YES                              │    REACHED?      │
            ▼                                  └──────────────────┘
  ┌──────────────────────────┐                       │ NO
  │CORRECT CAPTURED IMAGE     │ ╭S941
  │DEPENDING ON VIBRATION OF  │
  │IMAGING DEVICE             │
  └──────────────────────────┘
            │
            ▼
  ┌──────────────────────────┐
  │  RECORD CAPTURED IMAGE   │ ╭S905
  └──────────────────────────┘
            │
            ▼
  ┌──────────────────────────┐
  │CALCULATE DISTANCE BETWEEN │ ╭S906
  │SUBJECT AND IMAGING DEVICE │
  └──────────────────────────┘
            │◄─────────────────────────────────────┘
            ▼
  ┌──────────────────────────┐
  │  ACQUIRE PRESENT POSITION │ ╭S922
  └──────────────────────────┘
            │
            ▼
  ┌──────────────────────────┐
  │  ACQUIRE ANGULAR VELOCITY │ ╭S923
  └──────────────────────────┘
            │
            ▼
      ┌─────────────┐
      │ IS IMAGING  │ ╭S908
  NO  │ END BUTTON  │
◄─────│  PRESSED?   │
      └─────────────┘
         │ YES
         ▼
      (  END  )
```

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000156818 A
- JP 2008102942 A